# EUROPÄISCHE PATENTSCHRIFT

(11) **EP 4 405 162 B1**
(45) Veröffentlichungstag und Bekanntmachung des Hinweises auf die Patenterteilung: **15.07.2026**
(21) Anmeldenummer: 22789574.5
(22) Anmeldetag: 23.09.2022
(51) Int. Cl.: B29C 65/18, B29C 65/30, B65B 51/10, B65B 51/14

(54) **SIEGELUNGSVORRICHTUNG, SIEGELUNGSSTATION UND VERFAHREN ZUR HERSTELLUNG EINER SOLCHEN SIEGELUNGSVORRICHTUNG**
SEALING DEVICE, SEALING STATION AND METHOD FOR PRODUCING SUCH A SEALING DEVICE
DISPOSITIF DE SCELLEMENT, STATION DE SCELLEMENT ET PROCÉDÉ DE FABRICATION D'UN TEL DISPOSITIF D'E SCELLEMENT

(30) Priorität: 24.09.2021 DE 102021124797
(43) Veröffentlichungstag der Anmeldung: 31.07.2024
(73) Patentinhaber: Ampack GmbH, 86343 Königsbrunn (DE)
(72) Erfinder: HAAK, Jürgen, 72820 Sonnenbühl (DE); KLEIN, Ilona, 86343 Königsbrunn (DE); GAAB, Alexander, 91589 Aurach (DE); ZIMMERMANN, Markus, 86343 Königsbrunn (DE); TOMSCHI, Korbinian, 86343 Königsbrunn (DE); STURM, Alois, 86316 Friedberg (DE)
(74) Vertreter: Daub, Thomas
(86) Internationale Anmeldenummer: PCT/EP2022/076472
(87) Internationale Veröffentlichungsnummer: WO 2023/046881

(56) Entgegenhaltungen:
- WO-A1-2016/055599
- DE-A1- 102009 046 469
- DE-B- 1 062 004
- US-A- 2 649 392

## Beschreibung

### Stand der Technik

In EP 3 515 693 B1 ist bereits eine Siegelungsvorrichtung zu einem Versiegeln eines Behälters vorgeschlagen worden. Diese Siegelungsvorrichtung umfasst zumindest ein Siegelwerkzeug, das eine ringförmige Siegelzone zu einem physischen Kontakt mit dem Behälter ausbildet, und zumindest eine keramische Heizeinheit zu einer eine Siegelung erzeugenden Erhitzung der Siegelzone.

Ferner ist aus DE 10 2016 218 218 A1 ebenfalls bereits eine Siegelungsvorrichtung zu einem Versiegeln eines Behälters bekannt, wobei die bereits bekannte Siegelungsvorrichtung zumindest ein Siegelwerkzeug, das eine ringförmige Siegelzone zu einem physischen Kontakt mit dem Behälter ausbildet, und zumindest eine keramische Heizeinheit zu einer eine Siegelung erzeugenden Erhitzung der Siegelzone umfasst.

Zudem ist aus DE 10 2009 046 469 A1 auch bereits eine Siegelungsvorrichtung zu einem Versiegeln eines Behälters bekannt, wobei die bereits bekannte Siegelungsvorrichtung zumindest ein Siegelwerkzeug, das eine ringförmige Siegelzone zu einem physischen Kontakt mit dem Behälter ausbildet, und zumindest eine keramische Heizeinheit zu einer eine Siegelung erzeugenden Erhitzung der Siegelzone umfasst.

### Offenbarung der Erfindung

Die Erfindung geht aus von einer Siegelungsvorrichtung, insbesondere einem Siegelkopf, zu einem Versiegeln eines Behälters, mit zumindest einem Siegelwerkzeug, das eine ringförmige Siegelzone zu einem physischen Kontakt mit dem Behälter ausbildet, und mit zumindest einer keramischen Heizeinheit zu einer eine Siegelung erzeugenden Erhitzung der Siegelzone.

Es wird vorgeschlagen, dass die keramische Heizeinheit einen Heizleiter umfasst, der in einem Heizbereich der keramischen Heizeinheit zumindest im Wesentlichen vollständig von einem wärmeleitenden keramischen Grundkörper der Heizeinheit umgeben ist. Der Behälter umfasst insbesondere eine Aufnahmeeinheit, welche dazu vorgesehen ist, ein Packgut aufzunehmen und insbesondere einen Behälterdeckel. Das Packgut kann beispielsweise eine Flüssigkeit, eine pastöse Masse, ein Schüttgut und/oder ein Stückgut umfassen. Das Packgut ist beispielsweise ein Lebensmittel, ein pharmazeutisches Produkt, ein Bedarfsgut oder dergleichen. Die Aufnahmeeinheit kann insbesondere als Becher, als Flasche, als Tube, als Schale, als Kiste oder dergleichen ausgebildet sein. Die Aufnahmeeinheit wird vorzugweise mit dem Behälterdeckel versiegelt. Bevorzugt ist der Behälterdeckel durch das Versiegeln dazu vorgesehen, die Aufnahmeeinheit wasserdicht und/oder luftdicht zu verschließen. Insbesondere abhängig von dem Packgut, kann die Aufnahmeeinheit und/oder der Behälterdeckel aus Metall, Glas, Keramik, Holz, Papier, Kunststoff und/oder einem Verbundstoff hergestellt sein. Die Aufnahmeeinheit und der Behälterdeckel können aus dem gleichen Material oder aus unterschiedlichen Materialen hergestellt sein. Bevorzugt ist der Behälterdeckel folienförmig oder plattenförmig, insbesondere als Siegelplatine, ausgebildet.

Die Siegelungsvorrichtung ist dazu vorgesehen, den an der Aufnahmeeinheit, insbesondere lose, anliegenden Behälterdeckel durch Kraft- und/oder Energieübertragung stoffschlüssig mit der Aufnahmeeinheit zu verbinden und den Behälter dadurch zu versiegeln. Die Siegelungsvorrichtung umfasst insbesondere zumindest ein Kraft- und/oder Energieübertragungselement zu einer Kraft- und/oder Energieübertragung auf den Behälter. Insbesondere umfasst die Siegelungsvorrichtung zumindest die keramische Heizeinheit als Kraft- und/oder Energieübertragungselement zu einer Übertragung von Wärme auf den Behälter. Beispielsweise umfasst die Siegelungsvorrichtung als Kraft- und/oder Energieübertragungselement, insbesondere zusätzlich zu der keramischen Heizeinheit, zumindest ein Presswerkzeug zu einem Aufpressen des Behälterdeckels auf die Aufnahmeeinheit. Vorzugsweise umfasst die Siegelungsvorrichtung zumindest einen Siegelhalter, an welchem die keramische Heizeinheit angeordnet ist. Das Siegelwerkzeug ist zu einem direkten Kontakt mit dem Behälter vorgesehen. Das Siegelwerkzeug ist insbesondere an dem Siegelhalter und/oder an dem Kraft-und/oder Energieübertragungselement angeordnet. Das Siegelwerkzeug kann als Einzelkomponente oder einteilig mit der keramischen Heizeinheit oder dem Siegelhalter ausgebildet sein. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Vorzugsweise umfasst die Siegelungsvorrichtung zumindest ein Antriebselement zu einer Bewegung des Siegelwerkzeugs entlang einer Versiegelungsrichtung, insbesondere auf den Behälter zu. Das Antriebselement ist insbesondere dazu vorgesehen, das Siegelwerkzeug vor dem Versiegeln in physischen Kontakt mit dem Behälter zu bringen und insbesondere nach dem Versiegeln von dem Behälter zu entfernen. Bevorzugt ist das Antriebselement als Linearantrieb, Schrittmotor oder Servoantrieb ausgebildet. Die ringförmige Siegelzone weist insbesondere in einer zur Versiegelungsrichtung senkrechten Ebene eine Materialaussparung auf. In der zur Versiegelungsrichtung senkrechten Ebene weist die ringförmige Siegelzone einen Außenumfang und einen, insbesondere die Materialaussparung begrenzenden, Innenumfang auf. Vorzugsweise sind der Außenumfang und der Innenumfang konzentrisch angeordnet. Alternativ sind jeweilige geometrische Mittelpunkte des Außenumfangs und des Innenumfangs gegeneinander versetzt angeordnet. Der Außenumfang und der Innenumfang bilden vorzugsweise jeweils eine geschlossene Linie oder einen geschlossenen Linienzug, welche/r insbesondere anwendungsabhängig in einer beliebigen Form ausgebildet sein kann. Beispielsweise bildet der Außenumfang und/oder der Innenumfang, jeweils für sich, einen Kreis, ein Oval, ein Rechteck, ein Polygon oder eine andere, insbesondere auf eine Versiegelungsfläche des Behälters abgestimmte, Form aus. Insbesondere können der Außenumfang und der Innenumfang bis auf einen Skalenfaktor die gleiche Form oder unterschiedliche Formen aufweisen. Vorzugsweise ist eine zur Versiegelungsrichtung senkrechte durchschnittliche Materialstärke der Siegelzone zwischen dem Außenumfang und dem Innenumfang kleiner als ein maximales Öffnungsmaß der Materialaussparung in der Ebene senkrecht zur Versieglungsrichtung, bevorzugt kleiner als eine Hälfte dieses maximalen Öffnungsmaßes, optional kleiner als ein Viertel dieses maximalen Öffnungsmaßes.

Die keramische Heizeinheit ist insbesondere dazu vorgesehen, das Siegelwerkzeug, insbesondere vor einem Kontakt des Siegelwerkzeugs mit dem Behälter, auf eine Versiegelungstemperatur aufzuheizen und optional während des Versiegelns auf der Versiegelungstemperatur zu halten. Der keramische Grundkörper ist vorzugsweise aus einem elektrisch isolierenden Material gefertigt und/oder mit einer elektrisch isolierenden Ummantelung beschichtet. Vorzugsweise ist der keramische Grundkörper und der Heizleiter aus dem gleichen keramischen Grundmaterial gefertigt, wobei der Heizleiter insbesondere dotiert ist, um eine elektrische Leitfähigkeit des Heizleiters gegenüber dem keramischen Grundkörper zu erhöhen. Alternativ ist der Heizleiter aus Metall gefertigt. Der Heizleiter ist insbesondere dazu vorgesehen, den keramischen Grundkörper zu erhitzen, wobei der keramische Grundkörper Wärme an das Siegelwerkzeug leitet. Der keramische Grundkörper weist vorzugsweise eine Wärmeleitfähigkeit von mehr als 20 W/mK, bevorzugt von mehr als 35W/mK auf, optional eine Wärmeleitfähigkeit von mehr als 100W/mK auf. Vorzugsweise ist der Heizleiter bis auf eine Kontaktierungsfläche oder Anschlussdrähte zu einem Anschluss einer Zuleitung und einer Ableitung von elektrischem Strom vollständig von dem keramischen Grundkörper umgeben. Der keramische Grundkörper ist im Inneren vorzugsweise zumindest im Wesentlichen homogen, insbesondere schichtfrei, ausgebildet. Insbesondere unterscheiden sich fertigungsbedingte, beispielsweise durch schichtweises Auftragen einer keramischen Rohmasse entstehende, Schichten innerhalb des keramischen Grundkörpers bezüglich chemischer und/oder physikalischer Eigenschaften um weniger als 25°%, bevorzugt um weniger als 15 %, besonders bevorzugt um weniger als 5 %, von einem Durchschnittswert der entsprechenden Eigenschaft des Grundkörpers. Insbesondere weist der keramische Grundkörper ausgehend von dem Heizleiter in jede zu einem Verlauf dem Heizleiter senkrechten Richtung die, insbesondere zumindest im Rahmen der oben genannten Schwankungen, gleiche Wärmeleitfähigkeit auf. Insbesondere weist der keramische Grundkörper eine zumindest im Wesentlichen, insbesondere zumindest im Rahmen der oben genannten Schwankungen, quasiisotrope Wärmeleitfähigkeit auf. Aufgrund von Diffusionsprozessen können chemische und/oder physikalische Eigenschaften in Bereichen des keramischen Grundkörpers, die näher an dem Heizleiter angeordnet sind, von Bereichen des keramischen Grundkörpers abweichen, die weiter von dem Heizleiter entfernt sind.

Durch die erfindungsgemäße Ausgestaltung kann der Heizleiter vorteilhaft zuverlässig vor einer Beschädigung bewahrt werden. Insbesondere kann die keramische Heizeinheit auch bei einer Beschädigung des keramischen Grundkörpers, beispielsweise durch ein Absplittern von Material, vorteilhaft zuverlässig weiter verwendet werden. Insbesondere kann ein Risiko, dass der Heizleiter beschädigt wird, vorteilhaft gering gehalten werden.

Weiter wird vorgeschlagen, dass die keramische Heizeinheit zumindest einen weiteren keramischen Grundkörper umfasst, der von dem keramischen Grundkörper separat ausgebildet ist, wobei der keramische Grundkörper und der weitere keramische Grundkörper in einer zu einer, insbesondere zu der bereits genannten, Versiegelungsrichtung senkrechten Ebene zumindest im Wesentlichen gleich weit von einem geometrischen Mittelpunkt der keramischen Heizeinheit, insbesondere der ringförmigen Siegelzone, entfernt angeordnet sind. Der weitere keramische Grundkörper umschließt vorzugsweise einen, von dem Heizleiter separat ausgebildeten, weiteren Heizleiter. Alternativ ist der keramische Grundkörper und der weitere keramische Grundkörper an demselben Heizleiter angeordnet. Der keramische Grundkörper und der weitere keramische Grundkörper können, insbesondere bei Siegeltemperatur, in physischem Kontakt zueinander stehen und/oder, insbesondere bei Umgebungstemperatur, beabstandet voneinander angeordnet sein. Insbesondere bildet der keramische Grundkörper, der weitere keramische Grundkörper und optional weitere keramische Grundkörper der keramischen Heizeinheit segmentweise eine Form der Siegelzone, insbesondere parallel zu dem Innenumfang und/oder dem Außenumfang der Siegelzone, nach. Insbesondere weist eine dem Siegelwerkzeug zugewandte und/oder eine das Siegelwerkzeug ausbildende, über die keramischen Grundkörper verteilte Fläche der keramischen Heizeinheit zumindest im Wesentlichen den gleichen Flächeninhalt auf wie die Siegelzone, insbesondere gleich bis auf 20 %, bevorzugt bis auf 10 %, besonders bevorzugt bis auf 5 %. Vorzugsweise sind die keramischen Grundkörper zumindest im Wesentlichen, insbesondere bis auf eine Fertigungstoleranz, baugleich ausgebildet und insbesondere rotationssymmetrisch oder drehsymmetrisch angeordnet. Durch die erfindungsgemäße Ausgestaltung kann bei einer Funktionsuntauglichkeit und/oder bei einer mangelhaften Versiegelungsgüte durch eines der keramischen Grundkörper mit zugehörigem Heizleiter vorteilhaft auf ein Ersetzen der gesamten keramischen Heizeinheit verzichtet werden. Insbesondere können Wartungskosten der Siegelungsvorrichtung vorteilhaft klein gehalten werden.

Ferner wird vorgeschlagen, dass die keramische Heizeinheit zumindest einen zusätzlichen keramischen Grundkörper umfasst, der von dem keramischen Grundkörper separat ausgebildet ist, wobei der keramische Grundkörper und der zusätzliche keramische Grundkörper auf unterschiedlichen, geschlossenen Bahnen um einen geometrischen Mittelpunkt der keramischen Heizeinheit, insbesondere der ringförmigen Siegelzone, angeordnet sind. Die unterschiedlichen Bahnen sind bezüglich des geometrischen Mittelpunkts vorzugsweise konzentrisch ausgebildet. Insbesondere sind der keramische Grundkörper und der weitere keramische Grundkörper von dem geometrischen Mittelpunkt ausgesehen hintereinander angeordnet. Der keramische Grundkörper und der weitere keramische Grundkörper können an korrespondierender Position auf ihrer jeweiligen Bahn angeordnet sein, insbesondere sodass der keramische Grundkörper den weiteren keramischen Grundkörper von dem geometrischen Mittelpunkt aus gesehen verdeckt, oder entlang ihrer jeweiligen Bahn versetzt gegeneinander angeordnet sein, insbesondere sodass der keramische Grundkörper den weiteren keramischen Grundkörper höchstens teilweise verdeckt. Der zusätzliche keramische Grundkörper umschließt vorzugsweise einen, von dem Heizleiter separat ausgebildeten, zusätzlichen Heizleiter. Alternativ ist der keramische Grundkörper und der zusätzliche keramische Grundkörper an demselben Heizleiter angeordnet. Der keramische Grundkörper und der zusätzliche keramische Grundkörper können, insbesondere bei Siegeltemperatur, in physischem Kontakt zueinander stehen und/oder, insbesondere bei Umgebungstemperatur, beabstandet voneinander angeordnet sein. Insbesondere bildet der keramische Grundkörper, der zusätzliche keramische Grundkörper und optional weitere keramische Grundkörper der keramischen Heizeinheit segmentweise die Form der Siegelzone, insbesondere in einer Richtung senkrecht zu dem Innenumfang und/oder dem Außenumfang der Siegelzone, nach. Beispielsweise weist die keramische Heizeinheit eine Bahn mit einem Durchmesser von 75 mm auf, auf welcher der keramische Grundkörper und optional der zumindest eine weitere keramische Grundkörper angeordnet ist, insbesondere um eine 75 mm-Siegelzone für einen 75 mm-Behälter zu beheizen. Beispielsweise weist die keramische Heizeinheit eine Bahn mit einem Durchmesser von 95 mm auf, auf welcher der zusätzliche keramische Grundkörper und optional weitere zusätzliche keramische Grundkörper angeordnet sind, insbesondere um eine 95 mm-Siegelzone für einen 95 mm-Behälter zu beheizen. Durch die erfindungsgemäße Ausgestaltung kann die keramische Heizeinheit für vorteilhaft viele Behältergrößen verwendet werden.

Weiterhin wird vorgeschlagen, dass die Siegelungsvorrichtung eine Steuer- oder Regeleinheit umfasst zu einer separaten Steuerung oder Regelung einer Temperatur der unterschiedlichen keramischen Grundkörper. Unter einer "Steuer- oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Steuer- oder Regeleinheit kann dazu ausgebildet sein, die Temperatur jedes keramischen Grundkörpers mit einem der Heizleiter individuell einzustellen oder die Temperatur von Gruppen von keramischen Grundkörpern individuell einzustellen. Eine Gruppe von keramischen Grundkörpern umfasst beispielsweise alle keramischen Grundkörper, welche auf derselben Bahn um den geometrischen Mittelpunkt der keramischen Heizeinheit angeordnet sind, und schließt insbesondere alle keramischen Grundkörper, die auf anderen Bahnen um den geometrischen Mittelpunkt der keramischen Heizeinheit angeordnet sind, aus. Durch die erfindungsgemäße Ausgestaltung kann die Siegelzone vorteilhaft variabel durch unterschiedliche Ansteuerung den Heizleitern auf den unterschiedlichen Bahnen auf eine Behältergeometrie des Behälters angepasst werden. Insbesondere kann eine zu einem Versiegeln verwendete Energie vorteilhaft gering gehalten werden, indem für einen konkreten Behälter nicht benötigte Heizleiter nicht angesteuert werden. Darüber hinaus kann in Zusammenspiel mit Temperatursensoren in/an den keramischen Grundkörpern eine Einstellung oder Regelung der keramischen Heizeinheit vorteilhaft präzise und zielgerichtet nachjustiert werden. Insbesondere kann bei einer mangelhaften Versiegelungsgüte durch einen der keramischen Grundkörper auf ein Anpassen einer Ansteuerung der gesamten keramischen Heizeinheit verzichtet werden.

Des Weiteren wird vorgeschlagen, dass zumindest ein elektrischer Anschluss der keramischen Heizeinheit für den Heizleiter quer, insbesondere zumindest im Wesentlichen senkrecht, zu einer Versiegelungsrichtung verläuft. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Besonders bevorzugt verläuft der elektrische Anschluss auf eine Mittenachse der Siegelungsvorrichtung zu, welche durch den geometrischen Mittelpunkt der Siegelzone und insbesondere parallel zu der Versiegelungsrichtung verläuft. Besonders bevorzugt sind alle elektrischen Anschlüsse der keramischen Heizeinheit, insbesondere für den Heizleitern und insbesondere für in/an der keramischen Heizeinheit angeordnete Sensoren, quer zu der Versiegelungsrichtung angeordnet und insbesondere auf die Mittenachse der Siegelungsvorrichtung ausgerichtet. Vorzugsweise ist der elektrische Anschluss an einer Seite des keramischen Grundkörpers angeordnet, welche von dem Siegelwerkzeug abgewandt angeordnet ist. Die Seite des keramischen Grundkörpers, an welchem der elektrische Anschluss angeordnet ist, ist vorzugsweise von der Mittenachse abgewandt angeordnet, alternativ der Mittenachse zugewandt angeordnet. Alternativ verläuft der elektrische Anschluss zumindest im Wesentlichen parallel zu der Versiegelungsrichtung. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Durch die erfindungsgemäße Ausgestaltung können die elektrischen Anschlüsse vorteilhaft zentral zusammengeführt werden. Insbesondere kann ein vorteilhaft großer Bauraum der Siegelungsvorrichtung frei von elektrischen Anschlüssen gehalten werden. Weiter kann vorteilhaft eine Zugentlastung der elektrischen Anschlüsse erreicht werden.

Darüber hinaus wird vorgeschlagen, dass der zumindest eine keramische Grundkörper das Siegelwerkzeug mit der Siegelzone zu einem direkten Kontakt mit dem Behälter zumindest teilweise ausbildet. Eine Seite des keramischen Grundkörpers, welche das Siegelwerkzeug ausbildet, kann glatt oder strukturiert ausgebildet sein, beispielsweise geriffelt, gewellt, mit Noppen versehen, mit einem Gitternetz versehen oder dergleichen. Die keramische Heizeinheit ist an dem Siegelhalter insbesondere an einer von dem Antriebselement abgewandten Seite des Siegelhalters angeordnet. Durch die erfindungsgemäße Ausgestaltung kann eine Siegelungsvorrichtung mit vorteilhaft wenig Einzelteilen bereitgestellt werden. Insbesondere kann ein Wärmewiderstand, insbesondere aufgrund von Kontaktwiderständen, von dem Heizleiter zu dem Behälter vorteilhaft gering gehalten werden. Insbesondere kann eine Wärmekapazität eines Segments der Siegelzone vorteilhaft gering gehalten werden. Insbesondere kann ein anormaler Temperaturabfall des keramischen Grundkörpers, beispielsweise aufgrund von Schmutz oder Flüssigkeit auf dem Behälter, vorteilhaft schnell erkannt werden.

Weiter wird vorgeschlagen, dass das Siegelwerkzeug als ein Aufsatz ausgebildet ist, der an dem keramischen Grundkörper, insbesondere reversibel, angeordnet ist. Unter "reversibel angeordnet" soll insbesondere wieder zerstörungsfrei lösbar fixiert verstanden werden. Insbesondere kann das Siegelwerkzeug mehrere Male ohne verschleißbedingte Funktionseinbußen des Siegelwerkzeugs und/oder des keramischen Grundkörpers an dem keramischen Grundkörper fixiert und wieder gelöst werden. Der Aufsatz ist vorzugsweise aus Metall gefertigt, beispielsweise aus rostfreiem Stahl, insbesondere aus hitzebeständigem Stahl. Der Aufsatz ist vorzugsweise an dem Siegelhalter befestigt, insbesondere verschraubt, alternativ eingerastet. Vorzugsweise umfasst die Siegelungsvorrichtung zumindest eine Halterung, um die keramische Heizeinheit an dem Siegelhalter zu fixieren, insbesondere zwischen dem Siegelhalter und der Halterung formschlüssig einzuschließen, optional einzuklemmen. Bei einer Ausgestaltung des Siegelwerkzeugs als Aufsatz kann das Siegelwerkzeug einteilig mit der Halterung ausgebildet sein oder separat von der Halterung ausgebildet sein. Durch die erfindungsgemäße Ausgestaltung kann Form und/oder Größe der Siegelzone vorteilhaft flexibel und einfach angepasst werden, insbesondere ohne die keramische Heizeinheit auszutauschen oder zu verändern.

Ferner wird vorgeschlagen, dass die Siegelungsvorrichtung eine Zentriereinheit zu einer Sicherung des Behälters während eines Versiegelungsvorgangs und einen, insbesondere den bereits genannten, Siegelhalter zu einer Aufnahme der keramischen Heizeinheit umfasst, wobei die keramische Heizeinheit formschlüssig zwischen der Zentriereinheit und dem Siegelhalter angeordnet ist. Die Zentriereinheit ist insbesondere in der Materialaussparung der Siegelzone angeordnet. Die Zentriereinheit ist vorzugsweise dazu vorgesehen, eine relative Anordnung des Behälterdeckels zu der Aufnahmeeinheit zu sichern. Die Zentriereinheit weist beispielsweise eine nach außen gewölbte Anlagefläche auf, welche zu einem direkten Kontakt mit dem Behälter, insbesondere dem Behälterdeckel, vorgesehen ist. Vorzugsweise ragt die Anlagefläche entlang der Versiegelungsrichtung über die Siegelzone heraus, insbesondere sodass die Zentriereinheit den Behälterdeckel vor einem Kontakt der Siegelzone mit dem Behälterdeckel in Richtung der Aufnahmeeinheit drückt, insbesondere einen Zentralbereich des Behälterdeckels in die Aufnahmeeinheit hineinbiegt. Insbesondere ist die Zentriereinheit einteilig mit der Halterung für die keramische Heizeinheit und/oder dem Siegelwerkzeug ausgebildet. Alternativ ist die Zentriereinheit separat von der Halterung für die keramische Heizeinheit und/oder dem Siegelwerkzeug ausgebildet. Durch die erfindungsgemäße Ausgestaltung kann eine Siegelungsvorrichtung mit einer vorteilhaft geringen Anzahl an Einzelbauteilen bereitgestellt werden. Darüber hinaus kann ein Risiko eines Verklemmens eines Behälterdeckels innerhalb der Materialaussparung der Siegelzone vorteilhaft gering gehalten werden.

Des Weiteren wird vorgeschlagen, dass die Siegelungsvorrichtung einen, insbesondere den bereits genannten, Siegelhalter zu einer Aufnahme der keramischen Heizeinheit umfasst, wobei der Siegelhalter das Siegelwerkzeug mit der Siegelzone ausbildet. Insbesondere ist die keramische Heizeinheit in einer Vertiefung des Siegelhalters eingebettet. Die Vertiefung erstreckt sich vorzugsweise von einer von dem Siegelwerkzeug abgewandten Seite des Siegelhalters in den Siegelhalter hinein. Der Siegelhalter ist vorzugsweise aus Metall gefertigt, beispielsweise aus rostfreiem Stahl, insbesondere aus hitzebeständigem Stahl. Insbesondere ist der Siegelhalter plattenförmig oder scheibenförmig ausgebildet. Vorzugsweise ist eine Materialstärke des Siegelhalters parallel zu der Versiegelungsrichtung von einer Auflagefläche der keramischen Heizeinheit in der Vertiefung bis zu der Siegelzone kleiner als eine maximale Erstreckung des keramischen Grundkörpers in diese Richtung. Vorzugsweise ist der keramische Grundkörper vollständig in der Vertiefung angeordnet und ragt insbesondere nicht aus dem Siegelhalter hervor. Eine Seite des Siegelhalters, welche das Siegelwerkzeug ausbildet, kann glatt oder strukturiert ausgebildet sein, beispielsweise geriffelt, gewellt, mit Noppen versehen, mit einem Gitternetz versehen oder dergleichen. Durch die erfindungsgemäße Ausgestaltung kann ein Risiko der Beschädigung der keramischen Heizeinheit vorteilhaft gering gehalten werden.

Weiterhin wird vorgeschlagen, dass der zumindest eine keramische Grundkörper aus Siliziumnitrid oder Aluminiumnitrid gefertigt ist. Vorzugsweise sind alle keramischen Grundkörper, insbesondere zumindest alle keramischen Grundkörper auf derselben geschlossenen Bahn, aus dem gleichen Material gefertigt. Optional sind keramische Grundkörper auf verschiedenen der Bahnen um den geometrischen Mittelpunkt der Siegelzone aus unterschiedlichen Materialien gefertigt. Durch die erfindungsgemäße Ausgestaltung weist die keramische Heizeinheit gleichzeitig eine vorteilhaft hohe Wärmeleitfähigkeit, eine vorteilhaft geringe Wärmekapazität und/oder eine vorteilhaft hohe Härte auf.

Vorzugsweise umfasst die Siegelungsvorrichtung zumindest eine zumindest teilweise in eine Siegeleinheit der Siegelungsvorrichtung integrierte Prüfeinheit zu einer Überwachung einer Versiegelungsgüte des von der Siegeleinheit versiegelten Behälters, wobei die Prüfeinheit zumindest einen Temperatursensor zu einer Erfassung einer Versiegelungstemperatur umfasst. Bevorzugt ist der Temperatursensor in einer Sensormaterialaussparung des keramischen Grundkörpers der keramischen Heizeinheit der Siegeleinheit angeordnet, und/oder der Temperatursensor ist in einer Sensormaterialaussparung eines Siegelwerkzeugs der Siegeleinheit angeordnet, wobei die Sensormaterialaussparung des Siegelwerkzeugs in einem Nahbereich der keramischen Heizeinheit angeordnet ist. Durch die erfindungsgemäße Ausgestaltung der Siegelvorrichtung können vorteilhaft Sensordaten zur Bestimmung der Versiegelungsgüte bereits während des Versiegelns und/oder unmittelbar danach gesammelt werden. Es kann auf eine gesonderte Prüfung der Versiegelungsgüte, insbesondere auf eine eigenständige Behälterkontrollstation, im Anschluss an das Versiegeln verzichtet werden. Insbesondere dadurch kann eine Gesamtlänge und eine Durchlaufzeit einer Abfüll-und/oder Produktionsanlage zur Befüllung der Behälter mit dem Packgut, welche die Siegelvorrichtung verwendet, vorteilhaft gering gehalten werden. Es kann vorteilhaft die Versieglungstemperatur für jeden der zu versiegelnden Behälter vorteilhaft individuell erfasst werden. Insbesondere kann eine Veränderung der Versiegelungstemperatur während des Versiegelns vorteilhaft überwacht werden. Insbesondere kann die Versiegelungstemperatur zu einer Bestimmung der Versiegelungsgüte ausgewertet werden. Beispielsweise kann anhand unterschiedlicher Temperaturveränderungen vorteilhaft zwischen einem verbogenen Behälterdeckel, einem doppellagigen Behälterdeckel, einem relativ zu der Aufnahmeeinheit verschobenen Behälterdeckel, einer zwischen dem Behälter und dem Behälterdeckel angeordneten Verunreinigung, wie beispielsweise einem Fluid, einem Nahrungsmittelrest oder anderen Verunreinigungen, oder dergleichen unterschieden werden.

Vorzugsweise ist der Temperatursensor in zumindest einer Ausgestaltung der erfindungsgemäßen Siegelungsvorrichtung in einer Sensormaterialaussparung des Siegelwerkzeugs angeordnet, die in einem Nahbereich des keramischen Grundkörpers der keramischen Heizeinheit angeordnet ist. Vorzugsweise ist die Sensormaterialaussparung bei einer Anordnung in einem Nahbereich des keramischen Grundkörpers der keramischen Heizeinheit, außerhalb des keramischen Grundkörpers der keramischen Heizeinheit angeordnet, vorzugsweise direkt im Siegelwerkzeug angeordnet. Unter einem "Nahbereich" soll insbesondere ein Bereich eines Elements verstanden werden, der insbesondere relativ zu einem weiteren Element, insbesondere zu einer dem Element zugewandten Außenfläche des weiteren Elements, einen maximalen Abstand insbesondere von weniger als 25 mm, bevorzugt von weniger als 10 mm und besonders bevorzugt von weniger als 8 mm aufweist. Bevorzugt weist der Temperatursensor relativ zur keramischen Heizeinheit, insbesondere relativ zum Grundkörper, einen maximalen Abstand insbesondere von weniger als 25 mm, bevorzugt von weniger als 10 mm und besonders bevorzugt von weniger als 8 mm auf. Bevorzugt ist der Temperatursensor derart in der Sensormaterialaussparung des Siegelwerkzeugs angeordnet, dass der Temperatursensor, insbesondere ein Temperaturerfassungsbereich des Temperatursensors, wie beispielsweise eine Temperatursensorspitze o. dgl., mit einem, insbesondere maximalen, Abstand von insbesondere weniger als 10 mm, bevorzugt von weniger als 5 mm und besonders bevorzugt von weniger als 2 mm zu einer Siegelfläche, insbesondere einer Siegelaußenfläche, des Siegelwerkzeugs oder einer Kontaktebene der Siegeleinheit, beabstandet angeordnet ist. Bevorzugt bildet die ringförmige Siegelzone die Siegelfläche des Siegelwerkzeugs. Vorzugsweise weist der Temperatursensor in einem in der Sensormaterialaussparung des Siegelwerkzeugs angeordneten Zustand entlang einer zumindest im Wesentlichen senkrecht zur Siegelfläche des Siegelwerkzeugs verlaufenden Richtung einen, insbesondere maximalen, Abstand mit einem Wert zwischen 0,1 mm und 5 mm auf. Es ist denkbar, dass der Temperatursensor in zumindest einer Ausgestaltung der erfindungsgemäßen Siegelungsvorrichtung in der Sensormaterialaussparung des Siegelwerkzeugs und in der Sensormaterialaussparung des Grundkörpers der Heizeinheit angeordnet ist. Der Temperatursensor kann teilweise im Grundkörper der Heizeinheit und teilweise im Siegelwerkzeug angeordnet sein. Der Temperatursensor kann sich vollständig durch den Grundkörper hindurch in das Siegelwerkzeug hinein erstrecken. Denkbar ist auch, dass der Temperatursensor vollständig außerhalb des Grundkörpers angeordnet ist. Zudem ist denkbar, dass die Prüfeinheit zwei getrennte Temperatursensoren aufweist, wobei einer der Temperatursensoren im oder am Siegelwerkzeug angeordnet ist und der andere der Temperatursensoren im oder am Grundkörper angeordnet ist, insbesondere um einen vorteilhaften Soll-IstVergleich einer Temperatur, insbesondere einen Vergleich einer an dem Grundkörper der Heizeinheit gewünschten Soll-Temperatur mit einer tatsächlich am Siegelwerkzeug vorherrschenden Ist-Temperatur, zu ermöglichen. Vorteilhaft kann durch ein Vorsehen von zwei separaten Temperatursensoren, bei dem einer der Temperatursensoren am Siegelwerkzeug und ein anderer der Temperatursensoren am Grundkörper der Heizeinheit angeordnet ist, vorzugsweise eine redundante Temperaturerfassung ermöglicht werden.

Der Temperatursensor ist vorzugsweise als Kontaktsensor ausgebildet, besonders bevorzugt als Widerstandsthermometer, alternativ als Ausdehnungsthermometer, oder Thermoelement. Bevorzugt ist der Temperatursensor an dem Energie- und/oder Kraftübertragungselement und/oder an dem Siegelwerkzeug angeordnet oder in dem Energie- und/oder Kraftübertragungselement und/oder in dem Siegelwerkzeug eingelassen. Alternativ ist der Temperatursensor an oder in dem Siegelhalter angeordnet. Alternativ ist der Temperatursensor zur berührungslosen Messung der Versiegelungstemperatur vorgesehen und beispielsweise als Pyrometer oder Thermographie-Kamera ausgebildet. Vorzugsweise ist der Temperatursensor dazu vorgesehen, eine Temperatur des Energie- und/oder Kraftübertragungselements, des Siegelwerkzeugs und/oder des Behälters als Versiegelungstemperatur zu erfassen. Bevorzugt ist der Temperatursensor dazu vorgesehen, einen Temperaturabfall des Energie- und/oder Kraftübertragungselements und/oder des Siegelwerkzeugs bei einem Kontakt mit dem Behälter zu erfassen. Alternativ ist der Temperatursensor dazu vorgesehen, einen Temperaturanstieg des Behälters bei einem Kontakt mit dem Energie- und/oder Kraftübertragungselement und/oder mit dem Siegelwerkzeug zu erfassen.

Ferner ist, insbesondere in zumindest einer Ausgestaltung der erfindungsgemäßen Siegelungsvorrichtung, denkbar, dass die Prüfeinheit zumindest zwei, insbesondere mehrere, Temperatursensoren und eine, insbesondere die bereits zuvor genannte, Recheneinheit zu einer Auswertung des mittels der Temperatursensoren erfassten Prüfparameters umfasst, wobei die Recheneinheit dazu vorgesehen ist, die Versiegelungsgüte in Abhängigkeit von einem Vergleich zweier Werte des Prüfparameters zu ermitteln, welche an zumindest zwei unterschiedlichen Messstellen erfasst werden, welche demselben Behälter zugeordnet sind. Es ist denkbar, dass die Siegelungsvorrichtung zur Lösung der Aufgabe, eine konstruktiv einfache und zuverlässige Ermittlung einer Versiegelungsgüte zu ermöglichen, in einer alternativen Ausgestaltung unabhängig von der Anordnung des Temperatursensors in einer Sensormaterialaussparung ausgebildet ist. Vorzugsweise umfasst die Siegelungsvorrichtung in der alternativen Ausgestaltung, insbesondere in der unabhängig von der Anordnung des Temperatursensors in einer Sensormaterialaussparung ausgebildeten Ausgestaltung, zumindest eine Siegeleinheit zu einer eine Siegelung erzeugenden Kraft- und/oder Energieübertragung auf einen Behälter und zumindest eine zumindest teilweise in die Siegeleinheit integrierte Prüfeinheit zu einer Überwachung einer Versiegelungsgüte des von der Siegeleinheit versiegelten Behälters, wobei die Prüfeinheit zumindest einen Temperatursensor zu einer Erfassung einer Versiegelungstemperatur umfasst, wobei die Prüfeinheit zumindest zwei, insbesondere mehrere, Temperatursensoren und eine, insbesondere die bereits zuvor genannte, Recheneinheit zu einer Auswertung des mittels der Temperatursensoren erfassten Prüfparameters umfasst, wobei die Recheneinheit dazu vorgesehen ist, die Versiegelungsgüte in Abhängigkeit von einem Vergleich zweier Werte des Prüfparameters zu ermitteln, welche an zumindest zwei unterschiedlichen Messstellen erfasst werden, welche demselben Behälter zugeordnet sind. Vorzugsweise sind die zwei Temperatursensoren an unterschiedlichen Positionen an der Heizeinheit und/oder dem Siegelwerkzeug angeordnet. Die Temperatursensoren sind vorzugsweise gleichmäßig entlang einer Längs- oder Haupterstreckungsachse des Grundkörpers der Heizeinheit an der Heizeinheit und/oder an dem Siegelwerkzeug angeordnet. Bevorzugt sind die Temperatursensoren gemäß einer n-zähligen Symmetrie an der Heizeinheit und/oder dem Siegelwerkzeug angeordnet. Insbesondere stellt "n" die Anzahl der Temperatursensoren dar. Beispielsweise sind die Temperatursensoren bei einer maximalen Anzahl von zwei Temperatursensoren um 180°, bei einer maximalen Anzahl von drei Temperatursensoren um 120°, bei einer maximalen Anzahl von vier Temperatursensoren um 90° usw. relativ zueinander versetzt an der Heizeinheit und/oder an dem Siegelwerkzeug angeordnet. Es ist jedoch auch denkbar, dass die Temperatursensoren, insbesondere in Abhängigkeit von einem Anwendungsgebiet, ungleichmäßig verteilt an der Heizeinheit und/oder an dem Siegelwerkzeug angeordnet sind oder, dass die Temperatursensoren segmentweise unterschiedlich angeordnet sind, wie beispielsweise in einem Segment gleichmäßig verteilt angeordnet, in einem weiteren Segment ungleichmäßig verteilt angeordnet usw. Weitere, einem Fachmann als sinnvoll erscheinende Anordnungen von Temperatursensoren, die insbesondere zu einer Ermittlung einer Versiegelungsgüte nutzbar ist, sind ebenfalls denkbar. Es kann vorteilhaft der Prüfparameter einfach ausgewertet werden. Insbesondere kann vorteilhaft eine positionspräzise Ermittlung, insbesondere von Temperaturschwankungen oder Temperaturunterschieden in verschiedenen Bereichen, ermöglicht werden.

Des Weiteren ist, insbesondere in zumindest einer Ausgestaltung der erfindungsgemäßen Siegelungsvorrichtung, denkbar, dass die Prüfeinheit eine, insbesondere die bereits zuvor genannte, Recheneinheit zu einer Auswertung des mittels des Temperatursensors erfassten Prüfparameters umfasst, wobei die Recheneinheit dazu vorgesehen ist, einen zeitlichen Verlauf des Prüfparameters auszuwerten, um die Versiegelungsgüte zu ermitteln. Es ist denkbar, dass die Siegelungsvorrichtung zur Lösung der Aufgabe, eine konstruktiv einfache und zuverlässige Ermittlung einer Versiegelungsgüte zu ermöglichen, in einer alternativen Ausgestaltung unabhängig von der Anordnung des Temperatursensors in einer Sensormaterialaussparung ausgebildet ist. Vorzugsweise umfasst die Siegelungsvorrichtung in der alternativen Ausgestaltung, insbesondere in der unabhängig von der Anordnung des Temperatursensors in einer Sensormaterialaussparung ausgebildeten Ausgestaltung, zumindest eine Siegeleinheit zu einer eine Siegelung erzeugenden Kraft- und/oder Energieübertragung auf einen Behälter und zumindest eine zumindest teilweise in die Siegeleinheit integrierte Prüfeinheit zu einer Überwachung einer Versiegelungsgüte des von der Siegeleinheit versiegelten Behälters, wobei die Prüfeinheit zumindest einen Temperatursensor zu einer Erfassung einer Versiegelungstemperatur umfasst, wobei die Prüfeinheit eine, insbesondere die bereits zuvor genannte, Recheneinheit zu einer Auswertung des mittels des Temperatursensors erfassten Prüfparameters umfasst, wobei die Recheneinheit dazu vorgesehen ist, einen zeitlichen Verlauf des Prüfparameters auszuwerten, um die Versiegelungsgüte zu ermitteln. Es ist denkbar, dass die Recheneinheit dazu vorgesehen ist, einen zeitlichen Verlauf des Prüfparameters in Abhängigkeit von mittels eines einzelnen Temperatursensors erfassten Werten des Prüfparameters auszuwerten oder dass die Recheneinheit dazu vorgesehen ist, einen zeitlichen Verlauf des Prüfparameters in Abhängigkeit von mittels einer Vielzahl an Temperatursensoren erfassten Werten des Prüfparameters auszuwerten. Es kann vorteilhaft eine präzise Fehlererkennung ermöglicht werden. Zudem kann vorteilhaft eine Prognosefunktion ermöglicht werden.

Ferner ist, insbesondere in zumindest einer Ausgestaltung der erfindungsgemä-ßen Siegelungsvorrichtung, denkbar, dass die Prüfeinheit zumindest eine Dichtungseinheit zumindest zu einer Abdichtung eines Aufnahmeraums der Siegeleinheit, in dem zumindest der Temperatursensor angeordnet ist, aufweist. Es ist denkbar, dass die Siegelungsvorrichtung zur Lösung der Aufgabe, eine konstruktiv einfache und zuverlässige Ermittlung einer Versiegelungsgüte zu ermöglichen, in einer alternativen Ausgestaltung unabhängig von der Anordnung des Temperatursensors in einer Sensormaterialaussparung ausgebildet ist. Vorzugsweise umfasst die Siegelungsvorrichtung in der alternativen Ausgestaltung, insbesondere in der unabhängig von der Anordnung des Temperatursensors in einer Sensormaterialaussparung ausgebildeten Ausgestaltung, zumindest eine Siegeleinheit zu einer eine Siegelung erzeugenden Kraft- und/oder Energieübertragung auf einen Behälter und zumindest eine zumindest teilweise in die Siegeleinheit integrierte Prüfeinheit zu einer Überwachung einer Versiegelungsgüte des von der Siegeleinheit versiegelten Behälters, wobei die Prüfeinheit zumindest einen Temperatursensor zu einer Erfassung einer Versiegelungstemperatur umfasst, wobei die Prüfeinheit zumindest eine Dichtungseinheit zumindest zu einer Abdichtung eines Aufnahmeraums der Siegeleinheit, in dem zumindest der Temperatursensor angeordnet ist, aufweist. Vorzugsweise umfasst die Dichtungseinheit zumindest ein, insbesondere keramisches, Durchführelement zu einer Durchführung von elektrischen Leitungen, insbesondere der Heizeinheit oder des Temperatursensors. Insbesondere umfasst die Dichtungseinheit für jeden Temperatursensor ein eigenes, dem Temperatursensor zugeordnetes Durchführelement zu einer Durchführung einer Leitung des jeweiligen Temperatursensors zu einer Verbindung mit der Recheneinheit und/oder mit einer Stromversorgung. Die Dichtungseinheit umfasst zumindest ein, insbesondere am Durchführelement angeordnetes, Kabelführungselement, wie beispielsweise eine Kabeltülle o. dgl., zu einer Führung einer in dem Durchführelement angeordneten Leitung der Heizeinheit und/oder des Temperatursensors aus dem Durchführelement heraus, wobei das Kabelführungselement bevorzugt eine Dicht- oder Zugentlastungsfunktion aufweist. Die Dichtungseinheit umfasst bevorzugt zumindest ein Dichtelement, das an einer Schnittstelle zwischen dem Siegelhalter und dem Siegelwerkzeug angeordnet ist, insbesondere zu einer Abdichtung des durch den Siegelhalter und das Siegelwerkzeug begrenzten Aufnahmeraums. Bevorzugt umfasst die Dichtungseinheit eine Vielzahl an Dichtelementen, insbesondere in Abhängigkeit von einer Anzahl an Kontaktlinien/-punkten zwischen dem Siegelhalter und dem Siegelwerkzeug, die an einer Schnittstelle zwischen dem Siegelhalter und dem Siegelwerkzeug angeordnet ist. Es kann vorteilhaft ein sicherer Betrieb der Siegelvorrichtung in einer feuchten Betriebsumgebung ermöglicht werden, wobei eine zuverlässige Ermittlung der Versiegelungsgüte realisierbar ist.

Darüber hinaus wird eine Siegelungsstation, insbesondere für eine Abfüll-und/oder Produktionsanlage vorgeschlagen, welche zumindest einen Siegelungsträger zu einer Lagerung zumindest einer erfindungsgemäßen Siegelungsvorrichtung, insbesondere mehrerer erfindungsgemäßer, Siegelungsvorrichtungen, zumindest eine erfindungsgemäße Siegelungsvorrichtung und zumindest eine Siegelunterstützung zu einem Stützen des Behälters, insbesondere mehrerer Behälter, während des Versiegelns, umfasst. Die Abfüll- und/oder Produktionsanlage umfasst insbesondere zumindest eine Abfüllstation zu einem Befüllen der Behälter mit dem Packgut. Optional umfasst die Abfüll- und/oder Produktionsanlage zumindest eine Produktionsstation zu einer Herstellung, Bearbeitung oder Aufbereitung des Packguts, der Behälter. Die Abfüll- und/oder Produktionsanalage umfasst vorzugsweise zumindest eine Förderanlage, insbesondere eine Bandförderanlage, zu einem Transport der Behälter mit dem Packgut von zumindest der Abfüllstation zu der Siegelungsstation. Die Abfüllstation oder eine weitere Station der Abfüll- und/oder Produktionsanlage ist dazu vorgesehen, den Behälterdeckel an der mit dem Packgut befüllten Aufnahmeeinheit anzuordnen, insbesondere aufzulegen. Die Siegelungsstation umfasst vorzugsweise eine Rahmeneinheit, zu einer Anordnung der Siegelungsstation an der Förderanlage. Die Siegelunterstützung und der Siegelungsträger sind vorzugsweise an der Rahmeneinheit befestigt. Vorzugsweise ist die Siegelunterstützung dazu vorgesehen, die den Behälter transportierende Förderanlage zu stützen und/oder die Rahmeneinheit an der Förderanlage auszurichten, insbesondere sodass der Behälter bei einem Stopp der Förderanlage eine relativ zu dem Siegelungsträger voreingestellte Siegelungsposition einnimmt. Der Siegelungsträger weist insbesondere zumindest eine Siegelkopfaufnahme zu einer Aufnahme, insbesondere einem Einhängen, der Siegelungsvorrichtung auf. Der Siegelungsträger ist insbesondere dazu vorgesehen, die Siegelungsvorrichtung und die Siegelungsposition des Behälters aufeinander abzustimmen. Bevorzugt weist der Sieglungsträger mehrere Siegelkopfaufnahmen zu einer Aufnahme mehrerer, insbesondere baugleicher, Siegelungsvorrichtungen auf. Die Siegelungsvorrichtungen können bezogen auf eine vorgesehene Transportrichtung der Behälter durch die Siegelungsstation nebeneinander, insbesondere für mittels mehrerer parallel verlaufender Förderanlangen der Abfüll- und/oder Produktionsanlagen transportierte Behälter, und/oder hintereinander, insbesondere für mittels derselben Förderanlage transportierte, Behälter, angeordnet sein. Die Siegelungsvorrichtungen können einzeln oder im Verbund ansteuerbar ausgebildet sein. Durch die erfindungsgemäße Ausgestaltung kann eine vorteilhaft robuste und zuverlässige Siegelungsstation zur Verfügung gestellt werden, die insbesondere gleichzeitig vorteilhaft einfach und flexibel an unterschiedliche Behältergeometrien anpassbar ist.

Darüber hinaus wird ein Verfahren zur Herstellung einer erfindungsgemäßen Siegelungsvorrichtung vorgeschlagen. Vorzugsweise wird in zumindest einem Verfahrensschritt des Verfahrens die keramische Heizeinheit an dem Siegelhalter fixiert. Besonders bevorzugt wird die keramische Heizeinheit an dem Siegelhalter formschlüssig befestigt. Insbesondere wird die keramische Heizeinheit in eine, insbesondere die bereits genannte, Vertiefung eingesetzt und/oder an eine hierzu vorgesehene Anlagefläche des Siegelhalters angelegt. Vorzugsweise wird die Halterung an der keramischen Heizeinheit angeordnet. Die Halterung wird in dem an der keramischen Heizeinheit anliegenden Zustand der Halterung vorzugsweise an dem Siegelhalter fixiert, insbesondere mittels zumindest einer Schraube. Vorzugsweise erstreckt sich die Halterung über mehrere der keramischen Grundkörper, insbesondere zu einer gleichzeitigen Fixierung dieser keramischen Grundkörper. Optional wird eine weitere Halterung der Siegelungsvorrichtung verwendet, um keramische Grundkörper, welche nicht von der Halterung fixiert werden, zu fixieren. Ist das Siegelwerkzeug als Aufsatz ausgebildet kann das Siegelwerkzeug zusammen mit der keramischen Heizeinheit von der Halterung fixiert werden oder nach einer Fixierung der keramischen Heizeinheit an der keramischen Heizeinheit befestigt werden. Durch die erfindungsgemäße Ausgestaltung kann der Heizleiter vorteilhaft zuverlässig vor einer Beschädigung bewahrt werden. Insbesondere kann die keramische Heizeinheit auch bei einer Beschädigung des keramischen Grundkörpers, beispielsweise durch ein Absplittern von Material, vorteilhaft zuverlässig weiter verwendet werden. Insbesondere kann ein Risiko, dass der Heizleiter beschädigt wird, vorteilhaft gering gehalten werden.

Weiterhin wird vorgeschlagen, dass in zumindest einem Verfahrensschritt des Verfahrens der zumindest eine keramische Grundkörper in einem ausgehärteten Zustand des keramischen Grundkörpers durch Materialabtrag an eine vorgesehene Behältergeometrie des Behälters angepasst wird. Vorzugsweise wird der keramische Grundkörper aus einem ausgehärteten keramischen Vorprodukt mit einer standardisierten Form und/oder Größe hergestellt. Das ausgehärtete keramische Vorprodukt wird beispielsweise durch Fräsen, Schleifen, Läppen, Honen, Bohren oder dergleichen in den keramischen Grundkörper übergeführt. Insbesondere wird eine Materialstärke der ausgehärteten keramischen Vorprodukte in einer Richtung senkrecht zu einem Verlauf des Heizleiters durch den Materialabtrag verringert. Durch die erfindungsgemäße Ausgestaltung des Verfahrens kann die keramische Heizeinheit vorteilhaft genau auf die Behältergeometrie angepasst werden. Insbesondere können spezielle Behältergeometrien vorteilhaft präzise nachgebildet werden. Insbesondere kann ein Volumen des keramischen Grundkörpers und eine damit verbundene Wärmekapazität vorteilhaft klein gehalten werden. Insbesondere kann der keramische Grundkörper vorteilhaft schnell aufgeheizt und abgekühlt werden. Insbesondere kann eine vorteilhaft zuverlässige und schnelle Temperaturregelung des keramischen Heizkörpers ermöglicht werden. Insbesondere kann die keramische Heizeinheit im Zuge einer Umrüstung der Siegelungsvorrichtung vorteilhaft angepasst werden. Insbesondere kann eine Anzahl an Neuanschaffungen von keramischen Heizeinheiten vorteilhaft gering gehalten werden.

Ferner wird vorgeschlagen, dass in zumindest einem Verfahrensschritt des Verfahrens, in welchem der keramische Grundkörper in einem ausgehärteten Zustand des keramischen Grundkörpers vorliegt, ein, insbesondere der bereits zuvor genannte, Temperatursensor in eine, insbesondere die bereits zuvor genannte, Sensormaterialaussparung, insbesondere eine Bohrung, des zumindest einen ausgehärteten keramischen Grundkörpers eingebracht wird. Vorzugsweise wird der keramische Grundkörper mit der Sensormaterialaussparung, insbesondere mittels Bohrens, auf einer von dem Siegelwerkzeug abgewandten Seite des keramischen Grundkörpers versehen. Besonders bevorzugt wird die Sensormaterialaussparung auf derselben Seite des keramischen Grundkörpers erstellt, auf welcher auch der elektrische Anschluss angeordnet ist. Pro keramischen Grundkörper können ein einzelner Temperatursensor oder mehrere Temperatursensoren, insbesondere auf mehrere Sensormaterialaussparungen verteilt, an den keramischen Grundkörper angeordnet werden. Besonders bevorzugt wird in jedem keramischen Grundkörper der keramischen Heizeinheit, welcher einen der Heizleiter umschließt, zumindest ein Temperatursensor eingebracht. Die Sensormaterialaussparung wird nach einer Einbringung des Temperatursensors vorzugsweise mit einer aushärtbaren Masse verschlossen. Durch die erfindungsgemäße Ausgestaltung kann der Temperatursensor an einer vorteilhaft flexibel wählbaren Stelle des keramischen Grundkörpers angeordnet werden. Insbesondere kann eine geeignete Position des Temperatursensors erst bei einer Montage der keramischen Heizeinheit entschieden werden. Insbesondere kann eine Anzahl an Temperatursensoren innerhalb der keramischen Heizeinheit mit vorteilhaft wenig Aufwand zu einem beliebigen Zeitpunkt angepasst, insbesondere erhöht, werden.

Die erfindungsgemäße Siegelungsvorrichtung, die erfindungsgemäße Siegelungsstation und/oder das erfindungsgemäße Verfahren sollen/soll hierbei nicht auf die oben beschriebene Anwendung und Ausführungsform beschränkt sein. Insbesondere kann die erfindungsgemäße Siegelungsvorrichtung, die erfindungsgemäße Siegelungsstation und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In der Zeichnung sind elf Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Siegelungsstation,
- Fig. 2: eine schematische Darstellung einer erfindungsgemäßen Siegelungsvorrichtung,
- Fig. 3: eine schematische Darstellung einer keramischen Heizeinheit der erfindungsgemäßen Siegelungsvorrichtung,
- Fig. 4: eine schematische, perspektivische Schnittdarstellung der erfindungsgemäßen Siegelungsvorrichtung,
- Fig. 5: ein schematisches Flussdiagramm eines Verfahrens zur Herstellung der erfindungsgemäßen Siegelungsvorrichtung,
- Fig. 6: ein schematisches Flussdiagramm eines erfindungsgemäßen Verfahrens zum Betrieb der erfindungsgemäßen Siegelungsvorrichtung,
- Fig. 7: eine schematische, perspektivische Schnittdarstellung einer weiteren Ausgestaltung einer erfindungsgemäßen Siegelungsvorrichtung mit einem Isolierelement,
- Fig. 8: eine schematische Darstellung einer anderen Ausgestaltung einer erfindungsgemäßen Siegelungsvorrichtung,
- Fig. 9: eine schematische, perspektivische Schnittdarstellung einer alternativen Ausgestaltung einer erfindungsgemäßen Siegelungsvorrichtung, in welcher eine Zentriereinheit gleichzeitig als Halterung für eine keramische Heizeinheit ausgebildet ist,
- Fig. 10: eine schematische Darstellung der alternativen Ausgestaltung der erfindungsgemäßen Siegelungsvorrichtung mit Blick auf ein Siegelwerkzeug dieser erfindungsgemäßen Siegelungsvorrichtung,
- Fig. 11: eine schematische Darstellung einer weiteren alternativen Ausgestaltung einer erfindungsgemäßen Siegelungsvorrichtung mit einer in einen Siegelungshalter eingebetteten keramischen Heizeinheit,
- Fig. 12: eine schematische, perspektivische Schnittdarstellung der weiteren alternativen Ausgestaltung der erfindungsgemäßen Siegelungsvorrichtung,
- Fig. 13: eine schematische Darstellung einer alternativen keramischen Heizeinheit einer erfindungsgemäßen Siegelungsvorrichtung,
- Fig. 14: eine schematische Darstellung einer weiteren alternativen keramischen Heizeinheit einer erfindungsgemäßen Siegelungsvorrichtung,
- Fig. 15: eine schematische Darstellung eine anderweitig ausgebildeten keramischen Heizeinheit einer erfindungsgemäßen Siegelungsvorrichtung,
- Fig. 16: eine schematische, perspektivische Schnittdarstellung einer alternativen Ausgestaltung der erfindungsgemäßen Siegelungsvorrichtung und
- Fig. 17: die erfindungsgemäße Siegelungsvorrichtung aus Figur 16 mit einer alternativen Anordnung eines Temperatursensors in einer schematischen Darstellung.

### Beschreibung der Ausführungsbeispiele

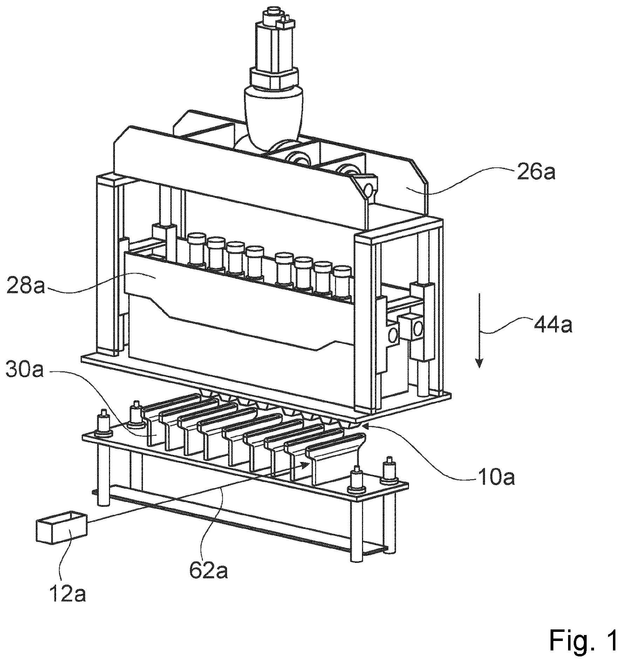

Figur 1 zeigt eine Siegelungsstation 26a. Die Siegelungsstation 26a ist insbesondere für eine Abfüll- und/oder Produktionsanlage vorgesehen. Die Siegelungsstation 26a umfasst zumindest eine Siegelungsvorrichtung 10a zu einem Versiegeln eines Behälters 12a. Der Behälter 12a wird von einer Förderanlange der Abfüll-und/oder Produktionsanlage vorzugsweise entlang einer Transportrichtung 62a intermittierend durch die Siegelungsstation 26a transportiert, wobei der Behälter 12a insbesondere an einer Siegelungsposition innerhalb der Siegelungsstation 26a zu einer Durchführung des Versiegelns des Behälters 12a angehalten wird. Vorzugsweise umfasst die Siegelungsstation 26a mehrere, hier beispielsweise acht, insbesondere baugleiche, Siegelungsvorrichtungen 10a. Die Siegelungsvorrichtungen 10a sind bezüglich der Transportrichtung 62a des Behälters 12a durch die Siegelungsstation 26a insbesondere parallel angeordnet, insbesondere zu einem parallelen Versiegeln mehrerer Behälter 12a. Die Siegelungsstation 26a umfasst zumindest einen Siegelungsträger 28a zu einem Lagern zumindest der einen Siegelungsvorrichtung 10a, bevorzugt mehrere, insbesondere aller, Siegelungsvorrichtungen 10a der Siegelungsstation 26a. Die Siegelungsstation 26a umfasst eine Siegelunterstützung 30a zu einem Stützen des Behälters 12a, insbesondere mehrerer Behälter 12a gleichzeitig, während des Versiegelns. Die Siegelungsstation 26a weist vorzugsweise zumindest einen Betriebsmodus auf, in welchem das Versiegeln vollautomatisiert von der Siegelungsstation 26a durchgeführt wird. Optional umfasst die Siegelungsstation 26a zumindest eine Ein- und/oder Ausgabeeinheit, insbesondere zumindest ein Display, zu einer Kontrolle des Versiegelns und/oder zur Anpassung eines Prozessparameters der Siegelungsstation 26a durch einen Benutzer.

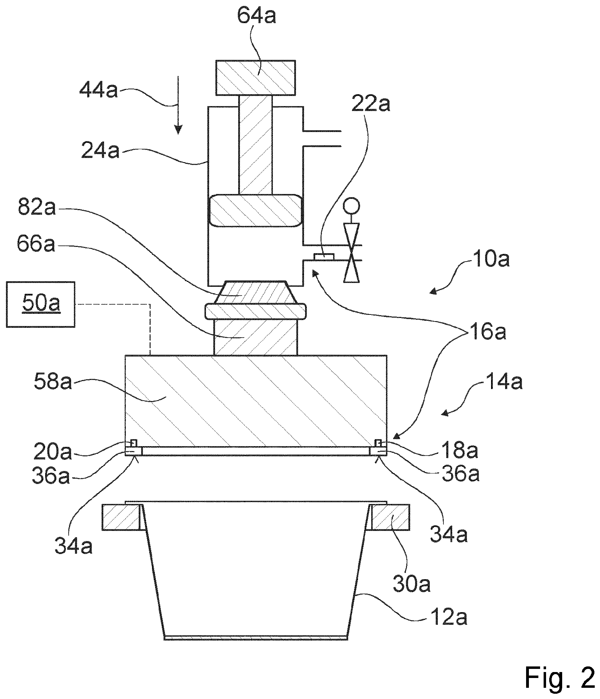

Figur 2 zeigt eine Schnittdarstellung der Siegelungsvorrichtung 10a, insbesondere in einer zur Transportrichtung 62a senkrechten Ebene. Die Siegelungsvorrichtung 10a ist insbesondere ein Siegelkopf. Die Siegelungsvorrichtung 10a ist zu einem Versiegeln des Behälters 12a vorgesehen. Die Siegelungsvorrichtung 10a ist zu einem Versiegeln des Behälters 12a durch Aufbringen eines Behälterdeckels auf eine Aufnahmeeinheit des Behälters 12 vorgesehen. Die Siegelungsvorrichtung 10a umfasst zumindest eine Siegeleinheit 14a zu einer eine Siegelung erzeugenden Kraft- und/oder Energieübertragung auf den Behälter 12a. Die Siegelungsvorrichtung 10a, insbesondere die Siegeleinheit 14a, umfasst zumindest ein Siegelwerkzeug 34a. Das Siegelwerkzeug 34a bildet eine ringförmige Siegelzone zu einem physischen Kontakt mit dem Behälter 12a aus. Die Siegelungsvorrichtung 10, insbesondere die Siegeleinheit 14a, umfasst zumindest eine keramischen Heizeinheit 36a zu einer eine Siegelung erzeugenden Erhitzung der Siegelzone. Die Siegelungsvorrichtung 10a, insbesondere die Siegeleinheit 14a, umfasst einen Siegelhalter 58a zu einer Aufnahme der keramischen Heizeinheit 36a. Die keramische Heizeinheit 36a bildet das Siegelwerkzeug 34a mit der Siegelzone zu einem direkten Kontakt mit dem Behälter 12a zumindest teilweise aus.

Die Siegelungsvorrichtung 10a, insbesondere die Siegeleinheit 14a, umfasst zumindest ein Antriebselement 64a, insbesondere einen Servomotor. Das Antriebselement 64a ist vorzugsweise mechanisch, hydraulisch und/oder pneumatisch an den Siegelhalter 58a gekoppelt. Das Antriebselement 64a ist insbesondere zu einer Verschiebung des Siegelhalters 58a zusammen mit dem daran befestigten Siegelwerkzeug 34a entlang einer Versiegelungsrichtung 44a der Siegelungsvorrichtung 10a zu verschieben, insbesondere um das Siegelwerkzeug 34a mit dem Behälter 12a in physischen Kontakt zu bringen. Die Versiegelungsrichtung 44a ist vorzugsweise zumindest im Wesentlichen senkrecht zu der Transportrichtung 62a des Behälters 12a. Die keramische Heizeinheit 36a ist insbesondere auf einer Seite des Siegelhalters 58a angeordnet, welche von dem Antriebselement 64a abgewandt ist.

Die Siegelungsvorrichtung 10a umfasst zumindest eine zumindest teilweise in die Siegeleinheit 14a integrierte Prüfeinheit 16a. Die Prüfeinheit 16a ist zu einer Überwachung einer Versiegelungsgüte des von der Siegeleinheit 14a versiegelten Behälters 12a vorgesehen. Die Prüfeinheit 16a umfasst zumindest einen Temperatursensor 18a zu einer Erfassung einer Versiegelungstemperatur. Die Prüfeinheit 16a umfasst zumindest einen weiteren Temperatursensor 20a zu einer ortsaufgelösten Erfassung der Versiegelungstemperatur. Der Temperatursensor 18a und/oder der weitere Temperatursensor 20a sind vorzugsweise an der keramischen Heizeinheit 36a und/oder an dem Siegelwerkzeug 34a angeordnet. Die Prüfeinheit 16a umfasst zumindest einen Aufpresssensor 22a zu einer Erfassung einer Versiegelungskraft und/oder eines Versiegelungsdrucks. Die Prüfeinheit 16a umfasst einen Pneumatikzylinder 24a, in oder an welchem der Aufpresssensor 22a angeordnet ist. Der Pneumatikzylinder 24a ist insbesondere zwischen dem Antriebselement 64a und dem Siegelhalter 58a angeordnet. Beispielsweise koppelt das Antriebselement 64a an einen Kolben des Pneumatikzylinders 24a, wobei ein Zylindergehäuse des Pneumatikzylinders 24a, welches den Kolben aufnimmt, direkt oder über eine Übertragungseinheit 66a der Siegeleinheit 14a mittelbar mit dem Siegelhalter 58a verbunden ist. Alternativ koppelt das Antriebselement 64a an das Zylindergehäuse des Pneumatikzylinders 24a und der Kolben des Pneumatikzylinders 24a direkt oder über die Übertragungseinheit 66a der Siegeleinheit 14a an den Siegelhalter 58a. Der Aufpresssensor 22a ist insbesondere in einer Zuleitung zu dem Zylindergehäuse des Pneumatikzylinders 24a angeordnet. Der Aufpresssensor 22a ist insbesondere in einem während des Versiegelns abgeschlossenen Volumen des Pneumatikzylinders 24a angeordnet und ist insbesondere zu einer Messung eines Gasdrucks innerhalb des Pneumatikzylinders 24a während des Versiegelns vorgesehen.

Die Siegelungsvorrichtung 10a umfasst eine Steuer- oder Regeleinheit 50a zu einer Steuerung oder Regelung einer Temperatur der keramischen Heizeinheit 36a. Die Steuer- oder Regeleinheit 50a ist insbesondere dazu vorgesehen, die Versiegelungstemperatur über die Temperatur der keramischen Heizeinheit 36a einzustellen oder zu regeln. Die Steuer- oder Regeleinheit 50a ist insbesondere zu einer Steuerung oder Regelung des Antriebselements 64a vorgesehen. Die Steuer- oder Regeleinheit 50a ist insbesondere dazu vorgesehen, die Versiegelungskraft und/oder den Versiegelungsdruck einzustellen oder zu regeln.

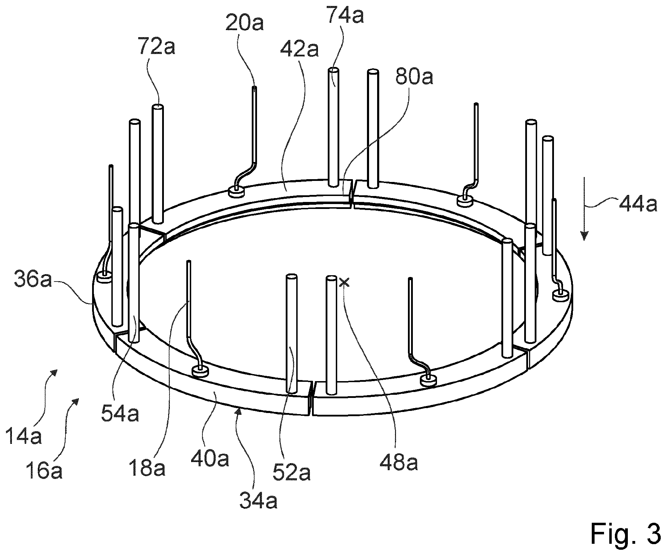

Figur 3 zeigt die keramische Heizeinheit 36a. Die keramische Heizeinheit 36a umfasst einen Heizleiter (hier nicht näher dargestellt), der in einem Heizbereich der keramischen Heizeinheit 36a zumindest im Wesentlichen vollständig von einem wärmeleitenden keramischen Grundkörper 40a der keramischen Heizeinheit 36a umgeben ist. Der zumindest eine keramische Grundkörper 40a ist aus Siliziumnitrid oder Aluminiumnitrid gefertigt. Der Heizleiter ist vorzugsweise aus Siliziumnitrid oder Aluminiumnitrid gefertigt, welches mit einem Zusatzstoff versehen wurde, um eine elektrische Leitfähigkeit gegenüber dem keramischen Grundkörper 40a zu erhöhen. Der Zusatzstoff macht insbesondere weniger als 50 %, vorzugsweise weniger als 25 % einer Gesamtmasse des Heizleiters aus. Die keramische Heizeinheit 36a umfasst vorzugweise elektrische Anschlüsse 52a, 54a, über welche der Heizleiter insbesondere mit der Steuer- oder Regeleinheit 50a elektrisch verbunden ist. Die elektrischen Anschlüsse 52a, 54a verlaufen insbesondere zumindest im Wesentlichen parallel zu der Versiegelungsrichtung 44a. Der zumindest eine keramische Grundkörper 40a bildet das Siegelwerkzeug 34a mit der Siegelzone zu einem direkten Kontakt mit dem Behälter 12a zumindest teilweise aus. Die Siegelzone ist hier insbesondere kreisringförmig ausgebildet. Die elektrischen Anschlüsse 52a, 54a sind insbesondere auf einer von dem Siegelwerkzeug 34a abgewandten Seite des keramischen Grundkörpers 40a angeordnet.

Die keramische Heizeinheit 36a umfasst zumindest einen weiteren, hier beispielsweise fünf weitere, keramischen Grundkörper 42a. Der weitere keramische Grundkörper 42a ist von dem keramischen Grundkörper 40a separat ausgebildet. Der weitere keramische Grundkörper 42a ist insbesondere baugleich zu dem keramischen Grundkörper 40a ausgebildet. Der keramische Grundkörper 40a und der weitere keramische Grundkörper 42a bilden insbesondere je ein Teilsegment der Siegelzone aus. Der keramische Grundkörper 40a und der weitere keramische Grundkörper 42a sind in einer zu einer Versiegelungsrichtung 44a senkrechten Ebene zumindest im Wesentlichen gleich weit von einem geometrischen Mittelpunkt 48a der keramischen Heizeinheit 36a, insbesondere der ringförmigen Siegelzone, entfernt angeordnet. Die keramische Heizeinheit 36a umfasst innerhalb des weiteren keramischen Grundkörpers 42a insbesondere einen weiteren Heizleiter. Der weitere Heizleiter ist vorzugsweise von dem Heizleiter separat ausgebildet und insbesondere über weitere elektrische Anschlüsse 72a, 74a der keramische Heizeinheit 36a elektrisch insbesondere mit der Steuer-oder Regeleinheit 50a verbunden. Die weiteren elektrischen Anschlüsse 72a, 74a sind vorzugsweise innerhalb der Siegeleinheit 14a separat von den elektrischen Anschlüssen 52a, 54a des Heizleiters ausgebildet. Die Steuer- oder Regeleinheit 50a ist zu einer separaten Steuerung oder Regelung einer Temperatur der unterschiedlichen keramischen Grundkörper 40a, 42a konfiguriert. Die Steuer- oder Regeleinheit 50a kann mehrere unabhängige Strom- und/oder Spannungsquellen und/oder Schaltelemente zu einer Verteilung eines elektrischen Stromflusses einer Strom- und/oder Spannungsquelle auf die verschiedenen elektrischen Anschlüsse 52a, 54a, 72a, 74a umfassen. Die weiteren elektrischen Anschlüsse 72, 74a und die elektrischen Anschlüsse 52a, 54a können anwendungsabhängig elektrisch getrennt voneinander an der Steuer- oder Regeleinheit 50a angeschlossen sein oder parallel oder in Reihe miteinander verschaltet sein. Insbesondere ist jedem keramischen Grundkörper 40a, 42a, der einen der Heizleiter umgibt, zumindest einer der Temperatursensoren 18a, 20a zugewiesen. Insbesondere ist der Temperatursensor 18a in einer Sensormaterialaussparung des keramischen Grundkörpers 40a angeordnet. Insbesondere ist der weitere Temperatursensor 20a in einer Sensormaterialaussparung des weiteren keramischen Grundkörpers 42a angeordnet. Die Sensormaterialaussparungen sind vorzugsweise auf derselben Seite der keramischen Grundkörper 40a, 42a angeordnet wie die jeweiligen elektrischen Anschlüsse 52a, 54a, 72a, 74a.

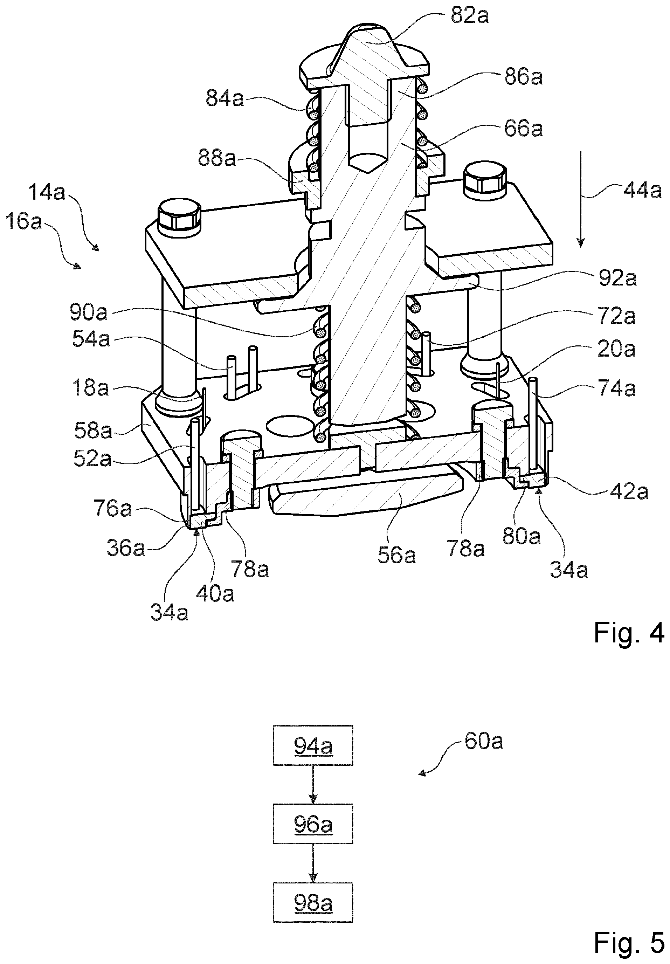

Figur 4 zeigt eine Schnittdarstellung der Siegelungsvorrichtung 10a in einer zur Versiegelungsrichtung 44a parallelen Ebene. Der Siegelhalter 58a umfasst insbesondere einen plattenförmigen Grundkörper, der vorzugsweise mehr als 50 %, insbesondere mehr als 75 % eines Gesamtvolumens des Siegelhalters 58a umfasst. Der Siegelhalter 58a ist vorzugsweise aus Metall, insbesondere Edelstahl, gefertigt. Der Siegelhalter 58a weist vorzugsweise eine Haltestruktur 76a auf, welche insbesondere zu einer formschlüssigen Aufnahme der keramischen Heizeinheit 36a in einer zur Versiegelungsrichtung 44a senkrechten Richtung vorgesehen ist. Die Haltestruktur 76a ragt insbesondere aus dem plattenförmigen Grundkörper des Siegelhalters 58a hervor. Die Haltestruktur 76a ist beispielsweise ringförmig ausgebildet und umgibt die keramische Heizeinheit 36a in einer zur Versiegelungsrichtung 44a senkrechten Ebene. Die Siegelungsvorrichtung 10a umfasst vorzugsweise eine Halterung 78a. Die Halterung 78a ist insbesondere dazu vorgesehen, die keramische Heizeinheit 36a in einer zur Versiegelungsrichtung 44a parallelen Richtung formschlüssig an dem Siegelhalter 58a zu fixieren. Beispielsweise ist die Halterung 78a als Haltering ausgebildet. Die Halterung 78a ist vorzugsweise aus Metall, insbesondere einem Edelstahl, gefertigt. Eine maximale Quererstreckung, insbesondere Außendurchmesser, der Halterung 78a senkrecht zur Versiegelungsrichtung 44a ist insbesondere kleiner als eine maximale Quererstreckung der keramischen Heizeinheit 36a. Vorzugsweise bilden die keramischen Grundkörper 40a, 42a der keramischen Heizeinheit 36a einen Vorsprung 80a aus, welcher insbesondere beabstandet von der dem Siegelwerkzeug 34a zugewandten und/oder der das Siegelwerkzeug 34a ausbildenden Seite des entsprechenden keramischen Grundkörpers 40a, 42a angeordnet ist. Der Vorsprung 80a ist insbesondere auf einer dem geometrischen Mittelpunkt 48a der keramischen Heizeinheit 36a zugewandten Seite des keramischen Grundkörpers 40a, 42a angeordnet. Insbesondere ist der Vorsprung 80a parallel zur Versiegelungsrichtung 44a zwischen dem Siegelhalter 58a, insbesondere dem plattenförmigen Grundkörper des Siegelhalters 58a und/oder einer aus dem plattenförmigen Grundkörper herausragenden Anlagestruktur des Siegelhalters 58a, und der Halterung 78a angeordnet, insbesondere eingeklemmt. Die Halterung 78a ist insbesondere mittels durch den Siegelhalter 58a hindurchragenden Schrauben an dem Siegelhalter 58a fixiert. Der Siegelhalter 58a weist vorzugsweise Anschlussmaterialaussparungen auf, durch welche die elektrischen Anschlüsse 52a, 54a, 72a, 74a und Anschlüsse für die Temperatursensoren 18a, 20a von der keramischen Heizeinheit 36a aus durch den Siegelhalter 58a hindurch geführt werden.

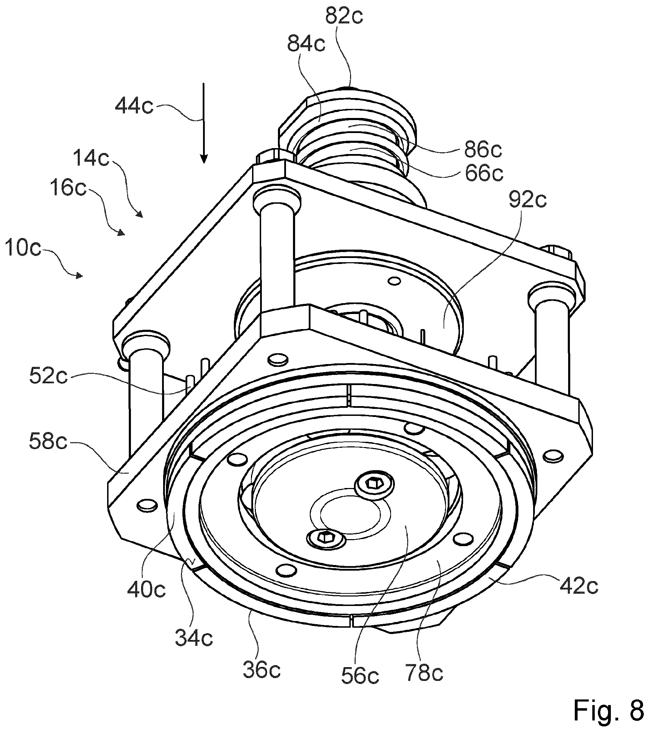

Die Siegelungsvorrichtung 10a umfasst eine Zentriereinheit 56a zu einer Sicherung des Behälters 12a während eines Versiegelungsvorgangs. Die Zentriereinheit 56a ist insbesondere als gewölbte Scheibe ausgebildet. Die Zentriereinheit 56a ist in einer Ebene senkrecht zur Versiegelungsrichtung 44a insbesondere innerhalb der keramischen Heizeinheit 36a und insbesondere innerhalb der Halterung 78a angeordnet. Insbesondere ist die Zentriereinheit 56a konzentrisch mit der keramischen Heizeinheit 36a und insbesondere mit der Halterung 78a angeordnet. Eine Wölbung der Zentriereinheit 56a ist parallel zur Zentriereinheit 56a insbesondere von dem Siegelhalter 58a weg, und insbesondere dem Behälter 12 zugewandt, ausgebildet. Die Zentriereinheit 56a ist insbesondere an dem Siegelhalter 58a verschraubt (vgl. hierzu Figur 8).

Die Übertragungseinheit 66a umfasst beispielsweise eine starre Übertragungsstange 86a, welche insbesondere zu einer Kraft- und/oder Druckübertragung von dem Antriebselement 64a über den Pneumatikzylinder 24a auf den Siegelhalter 58a vorgesehen ist. Eine maximale Längserstreckung der Übertragungsstange 86a ist insbesondere zumindest im Wesentlichen parallel zu der Versiegelungsrichtung 44a angeordnet. Insbesondere umfasst die Übertragungseinheit 66a einen konischen Aufsatz 82a, der an einem von dem Siegelhalter 58a abgewandten Ende der Übertragungsstange 86a angeordnet ist. Der konische Aufsatz 82a wird in einer Ebene senkrecht zu der Versiegelungsrichtung 44a vorzugsweise von dem Zylindergehäuse des Pneumatikzylinder 24a umgeben. Vorzugsweise umfasst die Übertragungseinheit 66a zumindest eine um die Übertragungsstange 86a herum angeordnete Feder 84a, welche an dem konischen Aufsatz 82a und an einer Lagerung 88a der Übertragungseinheit 66a angreift. Die Lagerung 88a ist vorzugsweise zu einem Einsatz der Siegelungsvorrichtung 10a in den Siegelungsträger 28a vorgesehen. Vorzugsweise umfasst die Übertragungseinheit 66a zumindest eine um die Übertragungsstange 86a herum angeordnete weitere Feder 90a, welche an dem Siegelhalter 58a und an einem Anschlagselement 92a der Übertragungsstange 86a angreift. Das Anschlagselement 92a definiert insbesondere eine Nullstellung der Übertragungsstange 86a, bei welcher insbesondere kein Kraft- und/oder Druckübertrag von dem Antriebselement 64a auf den Behälter 12a stattfindet, auch wenn das Siegelwerkzeug 34a in physischem Kontakt mit dem Behälter 12a steht. Vorzugsweise ist die Übertragungsstange 86a zumindest in der Nullstellung beabstandet von dem Siegelhalter 58a angeordnet.

Figur 5 zeigt ein Verfahren 60a zur Herstellung der Siegelungsvorrichtung 10a. Das Verfahren 60a zur Herstellung der Siegelungsvorrichtung 10a umfasst vorzugsweise einen Anpassungsschritt 94a. In dem Anpassungsschritt 94a wird bevorzugt ein, insbesondere standardisiertes, Vorprodukt der keramischen Heizeinheit 36a, insbesondere der keramischen Grundkörper 40a, 42a, bereitgestellt. In dem Vorprodukt liegt der keramische Grundkörper 40a, 42a insbesondere in einem bereits, insbesondere durch Sinterung und insbesondere vollständig, ausgehärteten Zustand vor. In dem zumindest einem Anpassungsschritt 94a des Verfahrens 60a zur Herstellung der Siegelungsvorrichtung 10a wird der zumindest eine keramische Grundkörper 40a, 42a in einem ausgehärteten Zustand des keramischen Grundkörpers 40a, 42a durch Materialabtrag an eine vorgesehene Behältergeometrie des Behälters 12a angepasst. Insbesondere wird eine Materialstärke des Vorprodukts in einer zur Versiegelungsrichtung 44a senkrechten Richtung auf eine vorgesehene Materialstärke des keramischen Grundkörpers 40a, 42a in dieser Richtung reduziert. Die vorgesehen Materialstärke ist vorzugsweise gleich einer Breite einer vorgesehenen Versiegelungsfläche des Behälters 12a.

Das Verfahren 60a zur Herstellung der Siegelungsvorrichtung 10a umfasst vorzugsweise einen Sensoreinbringungsschritt 96a. In dem Sensoreinbringungsschritt 96a des Verfahrens 60a zur Herstellung der Siegelungsvorrichtung 10a liegt der zumindest eine keramische Grundkörper 40a, 42a, in einem ausgehärten Zustand des keramischen Grundkörpers 40a, 42a vor. In dem Sensoreinbringungsschritt 96a wird insbesondere zumindest eine Sensormaterialaussparung in den keramischen Grundkörper 40a, 42a erstellt, insbesondere gebohrt. Alternativ wird die Sensormaterialaussparung in oder vor dem Anpassungsschritt 94a in den keramischen Grundkörper 40a, 42a erstellt. In dem Sensoreinbringungsschritt 96a wird der Temperatursensor 18a, 20a in der Sensormaterialaussparung, insbesondere einer Bohrung, des zumindest einen ausgehärteten keramischen Grundkörpers 40a, 42a eingebracht. Optional wird die Sensormaterialaussparung nach Einbringung des Temperatursensors 18a, 20a mit einem aushärtbaren Material aufgefüllt und/oder verschlossen.

Das Verfahren 60a zur Herstellung der Siegelungsvorrichtung 10a umfasst insbesondere einen Montageschritt 98a. In dem Montageschritt 98a wird die keramische Heizeinheit 36a an dem Siegelhalter 58a angeordnet, und insbesondere entlang der Haltestruktur 76a an der Haltestruktur 76a angelegt. Insbesondere werden die einzelnen keramischen Grundkörper 40a, 42a entlang zumindest einer geschlossenen Bahn angeordnet, welche in einer Ebene senkrecht zu der Versiegelungsrichtung 44a verläuft. Vorzugsweise werden die keramischen Grundkörper 40a entlang der zumindest einen geschlossenen Bahn nur geringfügig beabstandet voneinander angeordnet. Der geringfügige Abstand entspricht vorzugsweise einer maximal erwarteten Temperaturausdehnung der keramischen Grundkörper 40a, 42a entlang der Bahn bei der Versiegelungstemperatur, insbesondere inklusive eines Sicherheitsfaktors. Die keramische Heizeinheit 36a wird insbesondere mit der Halterung 78a an dem Siegelhalter 58a gesichert.

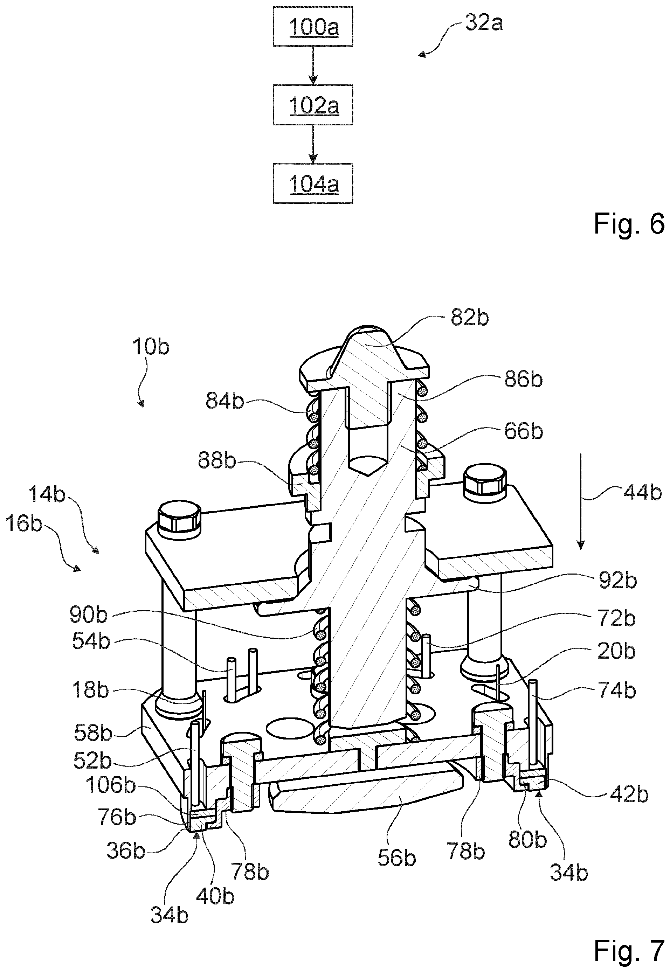

Figur 6 zeigt ein Verfahren 32a zum Betrieb der Siegelungsvorrichtung 10a und/oder einer Siegelungsstation 26a. Das Verfahren 32a zum Betrieb der Siegelungsvorrichtung 10a umfasst vorzugsweise einen Erfassungsschritt 100a. Der Erfassungsschritt 100a wird insbesondere während des Versiegelns des Behälters 12a durchgeführt. Während des von der Siegeleinheit 14a ausgeführten Versiegelns erfasst die Prüfeinheit 16a zumindest einen Prüfparameter, um die Versiegelungsgüte zu ermitteln. Der Erfassungsschritt 100a kann vor dem Versiegeln beginnen und/oder über das Ende des Versiegelns hinaus fortdauern, insbesondere um Vergleichswerte für einen während des Versiegelns erfassten Prüfwert des Prüfparameters zu erfassen. Der Prüfparameter ist vorzugsweise als Versiegelungstemperatur der keramischen Heizeinheit 36a ausgebildet, der insbesondere von den Temperatursensoren 18a, 20a der Prüfeinheit 16a erfasst wird. Besonders bevorzugt erfasst die die Prüfeinheit 16a mittels der Temperatursensoren 18a, 20a für mehrere, insbesondere jeden keramischen Grundkörper 40a, 42a, eine spezifische Versiegelungstemperatur. Bevorzugt umfasst die Prüfeinheit 16a eine Recheneinheit (hier nicht näher dargestellt) zu einer Auswertung des mittels der Temperatursensoren 18a, 20a erfassten Prüfparameters. Vorzugsweise ist die Recheneinheit dazu vorgesehen, die Versiegelungsgüte in Abhängigkeit von einem Vergleich zweier Werte des Prüfparameters zu ermitteln, welche an zumindest zwei unterschiedlichen Messstellen erfasst werden, welche demselben Behälter 12a zugeordnet sind. Alternativ oder zusätzlich ist die Recheneinheit dazu vorgesehen, einen zeitlichen Verlauf des Prüfparameters auszuwerten, um die Versiegelungsgüte zu ermitteln. Vorzugsweise erfasst die Prüfeinheit 16a als zusätzlichen oder alternativen Prüfparameter einen von dem Aufpresssensor 22a gemessenen Versiegelungsdruck. Der Vergleichswert und/oder der Prüfwert des jeweiligen Prüfparameters kann insbesondere als Einzelwert, insbesondere als Stichprobe und/oder zeitlicher Mittelwert, als Serie von Werten oder als quasi kontinuierlicher Zeitverlauf erfasst werden.

Das Verfahren 32a zum Betrieb der Siegelungsvorrichtung 10a umfasst vorzugsweise einen Auswerteschritt 102a. Der Auswerteschritt 102a wird insbesondere von einer Recheneinheit der Prüfeinheit 16a ausgeführt. Optional verarbeitet die Recheneinheit von den Temperatursensoren 18a, 20a und/oder dem Aufpresssensor 22a erfasste Rohdaten zu dem Prüfparameter, beispielsweise durch Ableiten, Integrieren, Mittelwertbildung, Differenzbildung oder dergleichen. Die Recheneinheit überprüft beispielsweise einen Temperaturabfall der keramischen Grundkörper 40a, 42a während eines Kontakts mit dem Behälter 12a, um die Versiegelungsgüte zu bestimmen. Die Recheneinheit vergleicht den/die Prüfparameter beispielsweise mit einem Sollwert für den Prüfparameter. In dem Auswerteschritt 102a ermittelt die Recheneinheit die Versiegelungsgüte in Abhängigkeit von einem Vergleich zweier Werte des Prüfparameters, welche an zumindest zwei unterschiedlichen Messstellen erfasst werden, welche demselben Behälter 12a zugeordnet sind. Insbesondere vergleicht die Recheneinheit einen Temperaturabfall des keramischen Grundkörpers 40a mit einem Temperaturabfall des weiteren keramischen Grundkörpers 42a. Insbesondere schließt die Recheneinheit auf eine mangelhafte Versiegelungsgüte, wenn die Prüfparameter für die unterschiedlichen Messtellen um mehr als einen, insbesondere anwendungsabhängigen, Toleranzwert voneinander abweichen.

In dem Auswerteschritt 102a ermittelt die Recheneinheit die Versiegelungsgüte des Behälters 12a in Abhängigkeit von einem Wert des Prüfparameters eines weiteren Behälters. Der weitere Behälter kann ein Behälter sein, der zeitgleich mit dem Behälter 12a von einer weiteren Siegelungsvorrichtung der Siegelungsstation 26a versiegelt wird oder ein Behälter, der vor dem Behälter 12a von der Siegelungsvorrichtung 10a versiegelt wurde. Insbesondere schließt die Recheneinheit auf eine mangelhafte Versiegelungsgüte, wenn die Prüfparameter für die unterschiedlichen Behälter 12a um mehr als einen, insbesondere anwendungsabhängigen, Toleranzwert voneinander abweichen. Vorzugsweise protokolliert die Recheneinheit zumindest bei einer mangelhaften Versiegelungsgüte, den/die Prüfparameter zu einer weiteren Auswertung. Insbesondere ermittelt die Recheneinheit anhand der protokollierten Prüfparameter, beispielsweise in Abhängigkeit von einer statistischen Häufung, anhand eines digitalen Modells der Siegelungsvorrichtung 10a, anhand von Trendkurven des/der Prüfparameter oder dergleichen, eine mögliche Fehlerquelle in der Siegelungsvorrichtung 10a und/oder in einer vorgelagerten Station der Abfüll- und/oder Produktionsanlage. Mögliche Fehlerquellen, zwischen welchen die Recheneinheit unterscheidet, umfassen insbesondere einen Defekt innerhalb der Siegelungsvorrichtung 10a, beispielsweise einen Defekt eines der Temperatursensoren 18a, 20a und/oder einen Defekt einer der Heizleiter, eine mangelhafte Ausrichtung eines Behälterdeckels relativ zu einer Aufnahmeeinheit des Behälters 12a, eine Verschmutzung des Behälters 12a, einen Knick in dem Behälterdeckel des Behälters 12 oder dergleichen. Kriterien zur Unterscheidung der Fehlerquellen können dabei explizit als Vergleichswerte in einem Speicher der Recheneinheit hinterlegt sein und/oder durch maschinelles Lernen von der Recheneinheit erstellt worden sein.

Das Verfahren 32a zum Betrieb der Siegelungsvorrichtung 10a umfasst vorzugsweise einen Ausgabeschritt 104a. Insbesondere wird in dem Ausgabeschritt 104a der Prüfparameter und/oder die Versiegelungsgüte ausgegeben. Vorzugsweise ist die Recheneinheit als Bestandteil der Steuer- oder Regeleinheit 50a ausgebildet oder weist zumindest eine Datenverbindung mit dieser auf, insbesondere zu einer Weiterleitung des unverarbeiteten Prüfparameters und/oder einer aus dem Prüfparameter abgeleiteten Anweisung zu einer veränderten Ansteuerung der Siegeleinheit 14a. Zusätzlich oder alternativ gibt die Recheneinheit in dem Ausgabeschritt 104a die ermittelte Versiegelungsgüte an einen Benutzer aus, beispielsweise über die Ein- und/oder Ausgabeeinheit der Siegelungsstation 26a und/oder über ein externes Ausgabegerät, wie beispielsweise ein Smartphone, ein Tablet, ein Display in einer zentralen Anlagensteuerung der Abfüll-und/oder Produktionsanlage oder dergleichen. Optional ist die Recheneinheit datentechnisch mit einer Sortierstation der Abfüll- und/oder Produktionsanlage verbunden, insbesondere um Behälter mit mangelhafter Versiegelungsgüte automatisch auszusortieren.

In den Figuren 7 bis 17 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispielen der Figuren 7 bis 17 ist der Buchstabe a durch die Buchstaben b bis j ersetzt.

Figur 7 zeigt eine Siegelungsvorrichtung 10b. Die Siegelungsvorrichtung 10b ist zu einem Versiegeln eines Behälters (hier nicht näher dargestellt) vorgesehen. Die Siegelungsvorrichtung 10b umfasst zumindest eine Siegeleinheit 14b zu einer eine Siegelung erzeugenden Kraft- und/oder Energieübertragung auf den Behälter. Die Siegelungsvorrichtung 10b, insbesondere die Siegeleinheit 14b, umfasst zumindest ein Siegelwerkzeug 34b, das eine ringförmige Siegelzone zu einem physischen Kontakt mit dem Behälter ausbildet. Die Siegelungsvorrichtung 10b, insbesondere die Siegeleinheit 14b, umfasst zumindest eine keramischen Heizeinheit 36b zu einer eine Siegelung erzeugenden Erhitzung der Siegelzone. Die keramische Heizeinheit 36b umfasst einen Heizleiter (hier nicht näher dargestellt), der in einem Heizbereich der keramischen Heizeinheit 36b zumindest im Wesentlichen vollständig von einem wärmeleitenden keramischen Grundkörper 40b, 42b der keramischen Heizeinheit 36b umgeben ist. Die Siegelungsvorrichtung 10b umfasst zumindest eine zumindest teilweise in die Siegeleinheit 14b integrierte Prüfeinheit 16b zu einer Überwachung einer Versiegelungsgüte des von der Siegeleinheit 14b versiegelten Behälters. Die Siegelungsvorrichtung 10b umfasst insbesondere ein, insbesondere wärmedämmendes, Isolierelement 106b. Das Isolierelement 106b ist vorzugsweise aus einem wärmedämmenden Material gefertigt. Bevorzugt ist das Isolierelement 106b, insbesondere in einer Richtung parallel zu einer Versiegelungsrichtung 44b der Siegelungsvorrichtung 10b, zwischen der keramischen Heizeinheit 36b und einem Siegelhalter 58b der Siegelungsvorrichtung 10b angeordnet. Das Isolierelement 106b ist vorzugsweise ringförmig ausgebildet. Vorzugsweise ist das Isolierelement 106b zusätzlich oder ein zusätzliches Isolierelement der Siegelungsvorrichtung 10b zwischen der keramischen Heizeinheit 36b und einer Haltestruktur 76b des Siegelhalters 58b angeordnet. Bezüglich weiterer Merkmale der Siegelungsvorrichtung 10b sei auf die Figuren 1 bis 6 und deren Beschreibung verwiesen.

Figur 8 zeigt eine Siegelungsvorrichtung 10c. Die Siegelungsvorrichtung 10c ist zu einem Versiegeln eines Behälters (hier nicht näher dargestellt) vorgesehen. Die Siegelungsvorrichtung 10c umfasst zumindest eine Siegeleinheit 14c zu einer eine Siegelung erzeugenden Kraft- und/oder Energieübertragung auf den Behälter. Die Siegelungsvorrichtung 10c, insbesondere die Siegeleinheit 14c, umfasst zumindest ein Siegelwerkzeug 34c, das eine ringförmige Siegelzone zu einem physischen Kontakt mit dem Behälter ausbildet. Die Siegelungsvorrichtung 10c, insbesondere die Siegeleinheit 14c, umfasst zumindest eine keramischen Heizeinheit 36c zu einer eine Siegelung erzeugenden Erhitzung der Siegelzone. Die keramische Heizeinheit 36c umfasst einen Heizleiter (hier nicht näher dargestellt), der in einem Heizbereich der keramischen Heizeinheit 36c zumindest im Wesentlichen vollständig von einem wärmeleitenden keramischen Grundkörper 40c, 42c der keramischen Heizeinheit 36c umgeben ist. Die Siegelungsvorrichtung 10c umfasst zumindest eine zumindest teilweise in die Siegeleinheit 14c integrierte Prüfeinheit 16c zu einer Überwachung einer Versiegelungsgüte des von der Siegeleinheit 14c versiegelten Behälters. Die keramische Heizeinheit 36c ist an einer von einem geometrischen Mittelpunkt der keramischen Heizeinheit 36c wegweisenden Außenfläche frei liegend an einem Siegelhalter 58c der Siegelungsvorrichtung 10c angeordnet. Insbesondere wird die keramische Heizeinheit 36a in einer Richtung senkrecht zu einer Versiegelungsrichtung 44c der Siegelungsvorrichtung 10c ausschließlich von einer Halterung 78c der Siegelungsvorrichtung 10c gehalten, welche insbesondere einen von der Außenfläche wegweisen Vorsprung des keramischen Grundkörpers 40c, 42c umgibt. Bezüglich weiterer Merkmale der Siegelungsvorrichtung 10c sei auf die Figuren 1 bis 7 und deren Beschreibung verwiesen.

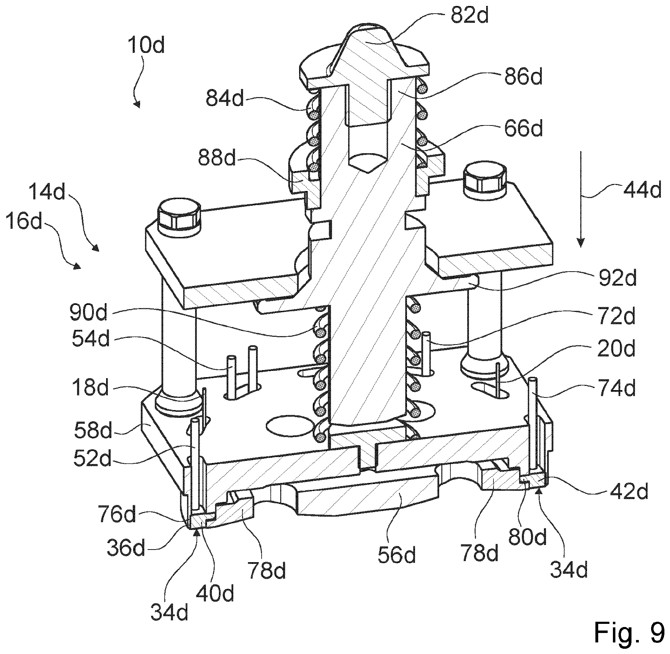

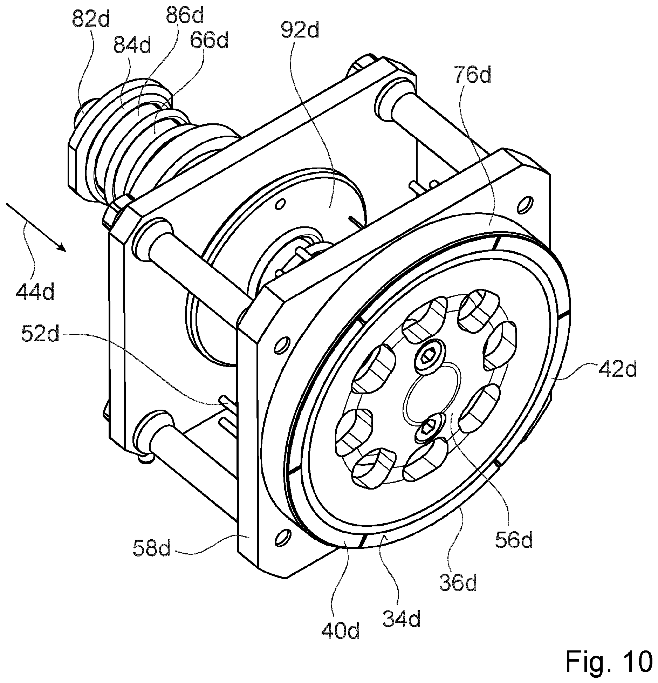

Figuren 9 und 10 zeigen eine Siegelungsvorrichtung 10d. Die Siegelungsvorrichtung 10d ist zu einem Versiegeln eines Behälters (hier nicht näher dargestellt) vorgesehen. Die Siegelungsvorrichtung 10d umfasst zumindest eine Siegeleinheit 14d zu einer eine Siegelung erzeugenden Kraft- und/oder Energieübertragung auf den Behälter. Die Siegelungsvorrichtung 10d, insbesondere die Siegeleinheit 14d, umfasst zumindest ein Siegelwerkzeug 34d, das eine ringförmige Siegelzone zu einem physischen Kontakt mit dem Behälter ausbildet. Die Siegelungsvorrichtung 10d, insbesondere die Siegeleinheit 14d, umfasst zumindest eine keramischen Heizeinheit 36d zu einer eine Siegelung erzeugenden Erhitzung der Siegelzone. Die keramische Heizeinheit 36d umfasst einen Heizleiter (hier nicht näher dargestellt), der in einem Heizbereich der keramischen Heizeinheit 36d zumindest im Wesentlichen vollständig von einem wärmeleitenden keramischen Grundkörper 40d, 42d der keramischen Heizeinheit 36d umgeben ist. Die Siegelungsvorrichtung 10d umfasst zumindest eine zumindest teilweise in die Siegeleinheit 14d integrierte Prüfeinheit 16d zu einer Überwachung einer Versiegelungsgüte des von der Siegeleinheit 14d versiegelten Behälters. Die Siegelungsvorrichtung 10d umfasst insbesondere eine Halterung 78d zu einer Fixierung der keramischen Heizeinheit 36d an einem Siegelhalter 58d der Siegelungsvorrichtung 10d. Die Siegelungsvorrichtung 10d umfasst vorzugsweise eine Zentriereinheit 56d. Die Zentriereinheit 56d bildet insbesondere die Halterung 78d aus. Die Zentriereinheit 56d erstreckt sich insbesondere über eine gesamte Materialaussparung der keramischen Heizeinheit 36d hinweg. Die Zentriereinheit 56d ist insbesondere in einer Richtung parallel zu einer Versiegelungsrichtung 44d der Siegelungsvorrichtung 10d überlappend mit der keramischen Heizeinheit 36d angeordnet. Die keramische Heizeinheit 36d ist formschlüssig zwischen der Zentriereinheit 56d und dem Siegelhalter 58d angeordnet. Insbesondere ist ein Vorsprung 80d des keramischen Grundkörpers 40d, 42d in der Richtung parallel zu der Versiegelungsrichtung 44d der Siegelungsvorrichtung 10d zwischen einem Siegelhalter 58d der Siegelungsvorrichtung 10d und der Zentriereinheit 56d angeordnet. Bezüglich weiterer Merkmale der Siegelungsvorrichtung 10d sei auf die Figuren 1 bis 8 und deren Beschreibung hingewiesen.

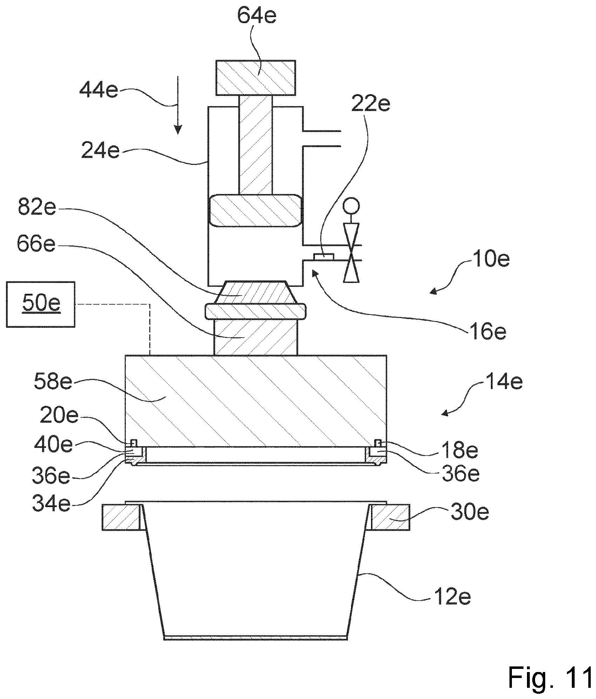

Figur 11 zeigt eine Siegelungsvorrichtung 10e. Die Siegelungsvorrichtung 10e ist zu einem Versiegeln eines Behälters 12e vorgesehen. Die Siegelungsvorrichtung 10e umfasst zumindest eine Siegeleinheit 14e zu einer eine Siegelung erzeugenden Kraft- und/oder Energieübertragung auf den Behälter 12e. Die Siegelungsvorrichtung 10e, insbesondere die Siegeleinheit 14e, umfasst zumindest ein Siegelwerkzeug 34e, das eine ringförmige Siegelzone zu einem physischen Kontakt mit dem Behälter 12e ausbildet. Die Siegelungsvorrichtung 10e, insbesondere die Siegeleinheit 14e, umfasst zumindest eine keramischen Heizeinheit 36e zu einer eine Siegelung erzeugenden Erhitzung der Siegelzone. Die keramische Heizeinheit 36e umfasst einen Heizleiter (hier nicht näher dargestellt), der in einem Heizbereich der keramischen Heizeinheit 36e zumindest im Wesentlichen vollständig von einem wärmeleitenden keramischen Grundkörper 40e der keramischen Heizeinheit 36e umgeben ist. Die Siegelungsvorrichtung 10e umfasst zumindest eine zumindest teilweise in die Siegeleinheit 14e integrierte Prüfeinheit 16e zu einer Überwachung einer Versiegelungsgüte des von der Siegeleinheit 14e versiegelten Behälters 12e. Das Siegelwerkzeug 34e ist als ein Aufsatz ausgebildet, der an dem keramischen Grundkörper 40e, insbesondere reversibel, angeordnet ist. Das Siegelwerkzeug 34e ist insbesondere aus Metall, insbesondere Edelstahl, gefertigt. Das Siegelwerkzeug 34e ist bevorzugt an einem Siegelhalter 58e der Siegelungsvorrichtung 10e verschraubt. Alternativ umfasst die Siegelungsvorrichtung 10e eine Halterung (hier nicht gezeigt), welche an dem Siegelhalter 58e angeschraubt ist und das Siegelwerkzeug 34e formschlüssig an der keramischen Heizeinheit 36e fixiert. Bezüglich weiterer Merkmale der Siegelungsvorrichtung 10e sei auf die Figuren 1 bis 10 und deren Beschreibung hingewiesen.

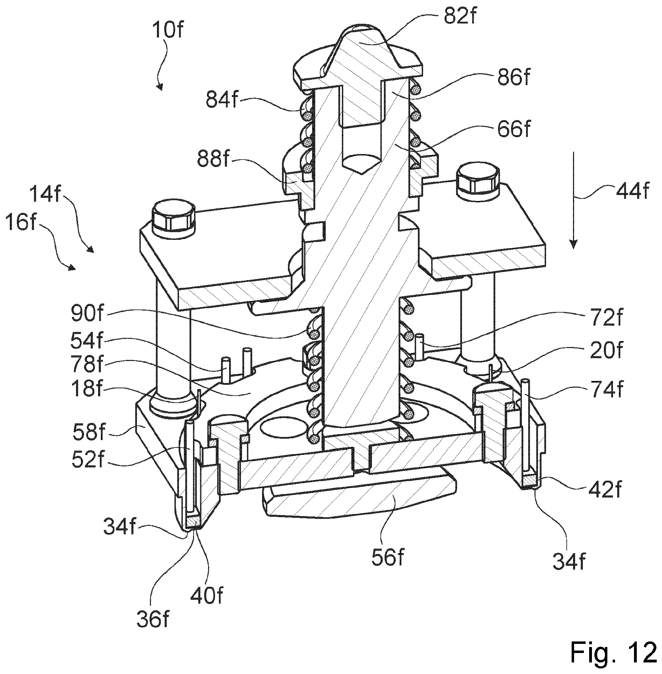

Figur 12 zeigt eine Siegelungsvorrichtung 10f auf. Die Siegelungsvorrichtung 10f ist zu einem Versiegeln eines Behälters (hier nicht näher dargestellt) vorgesehen. Die Siegelungsvorrichtung 10f umfasst zumindest eine Siegeleinheit 14f zu einer eine Siegelung erzeugenden Kraft- und/oder Energieübertragung auf den Behälter. Die Siegelungsvorrichtung 10f, insbesondere die Siegeleinheit 14f, umfasst zumindest ein Siegelwerkzeug 34f, das eine ringförmige Siegelzone zu einem physischen Kontakt mit dem Behälter ausbildet. Die Siegelungsvorrichtung 10f, insbesondere die Siegeleinheit 14f, umfasst zumindest eine keramischen Heizeinheit 36f zu einer eine Siegelung erzeugenden Erhitzung der Siegelzone. Die keramische Heizeinheit 36f umfasst einen Heizleiter (hier nicht näher dargestellt), der in einem Heizbereich der keramischen Heizeinheit 36f zumindest im Wesentlichen vollständig von einem wärmeleitenden keramischen Grundkörper 40f der keramischen Heizeinheit 36f umgeben ist. Die Siegelungsvorrichtung 10f umfasst zumindest eine zumindest teilweise in die Siegeleinheit 14f integrierte Prüfeinheit 16f zu einer Überwachung einer Versiegelungsgüte des von der Siegeleinheit 14f versiegelten Behälters. Die keramische Heizeinheit 36f ist insbesondere innerhalb eines Siegelhalters 58f der Siegelungsvorrichtung angeordnet. Insbesondere weist eine dem Siegelwerkzeug 34f abgewandte Seite des Siegelhalters 58f eine Vertiefung auf, in welcher die keramische Heizeinheit 36f eingesetzt ist. Die Siegelungsvorrichtung 10f umfasst insbesondere eine Halterung 78f, welche die keramische Heizeinheit 36f formschlüssig innerhalb des Siegelhalters 58f, insbesondere innerhalb der Vertiefung, fixiert. Die Halterung 78f ist vorzugsweise auf einer von dem Siegelwerkzeug 34f abgewandten Seite des Siegelhalters 58f an dieser Seite angeordnet. Vorzugsweise greift die Halterung 78f in den Siegelhalter 58f, insbesondere in die Vertiefung, hinein, um die keramische Heizeinheit 36f, innerhalb des Siegelhalters 58f, insbesondere an einem Boden der Vertiefung, zu fixieren. Der Siegelhalter 58f bildet das Siegelwerkzeug 34f mit der Siegelzone aus. Bezüglich weiterer Merkmale der Siegelungsvorrichtung 10f sei auf die Figuren 1 bis 11 und deren Beschreibung hingewiesen.

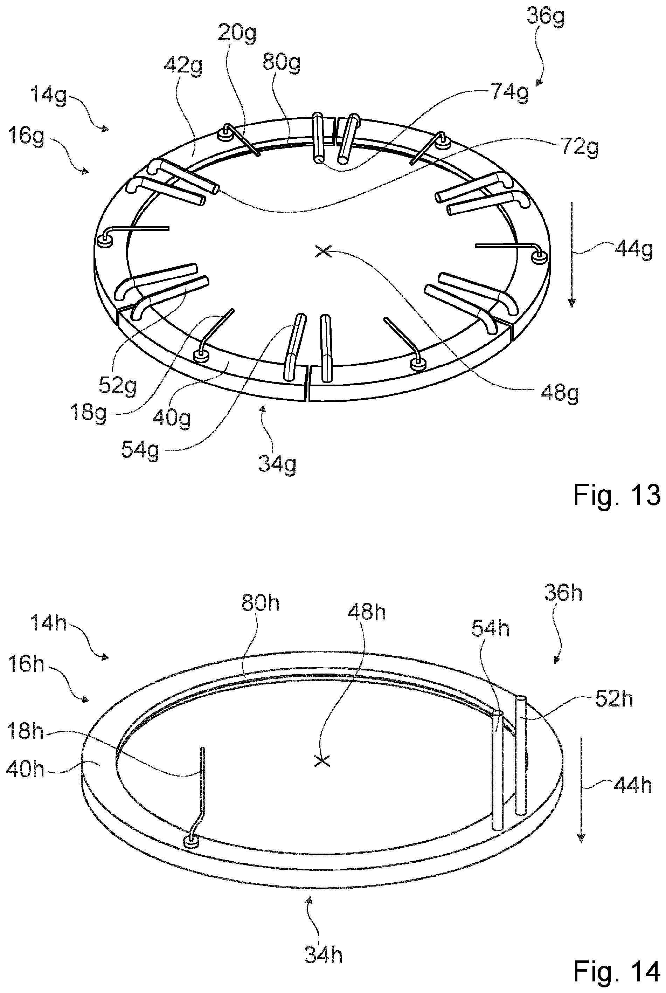

Figur 13 zeigt eine keramische Heizeinheit 36g für eine Siegelungsvorrichtung, wie sie in den vorhergehenden Abschnitten beschrieben ist. Die keramische Heizeinheit 36g umfasst einen Heizleiter (hier nicht näher dargestellt), der in einem Heizbereich der keramischen Heizeinheit 36g zumindest im Wesentlichen vollständig von einem wärmeleitenden keramischen Grundkörper 40g, 42g der keramischen Heizeinheit 36g umgeben ist. Zumindest ein elektrischer Anschluss, insbesondere alle elektrischen Anschlüsse, 52g, 54g, 72g, 74g der keramische Heizeinheit 36g für den Heizleiter verläuft quer, insbesondere senkrecht, zu einer Versiegelungsrichtung 44g der Siegelungsvorrichtung. Die elektrischen Anschlüsse 52g, 54g, 72g, 74g sind insbesondere auf eine zu der Versiegelungsrichtung 44g parallel verlaufende Mittenachse der keramischen Heizeinheit 36g und/oder der Siegelungsvorrichtung ausgerichtet, welche durch einen geometrischen Mittelpunkt 48g der keramischen Heizeinheit 36g verläuft. Vorzugsweise sind Anschlüsse für Temperatursensoren 18g, 20g der Siegelungsvorrichtung, welche in oder an dem keramischen Grundkörper 40g, 42g angeordnet sind, analog hierzu angeordnet und/oder ausgerichtet. Bezüglich weiterer Merkmale der keramischen Heizeinheit 36g und deren Anordnung in einer Siegelungsvorrichtung sei auf die Figuren 1 bis 12 und deren Beschreibung hingewiesen.

Figur 14 zeigt eine keramische Heizeinheit 36h für eine Siegelungsvorrichtung, wie sie in den vorhergehenden Abschnitten beschrieben ist. Die keramische Heizeinheit 36h umfasst einen Heizleiter (hier nicht näher dargestellt), der in einem Heizbereich der keramischen Heizeinheit 36h zumindest im Wesentlichen vollständig von einem wärmeleitenden keramischen Grundkörper 40h der keramischen Heizeinheit 36h umgeben ist. Insbesondere ist der keramische Grundkörper 40h als geschlossener Ring ausgebildet. Insbesondere ist der keramische Grundkörper 40h der einzige keramische Grundkörper 40h der keramischen Heizeinheit 36h. Bezüglich weiterer Merkmale der keramischen Heizeinheit 36h und deren Anordnung in einer Siegelungsvorrichtung sei auf die Figuren 1 bis 13 und deren Beschreibung hingewiesen.

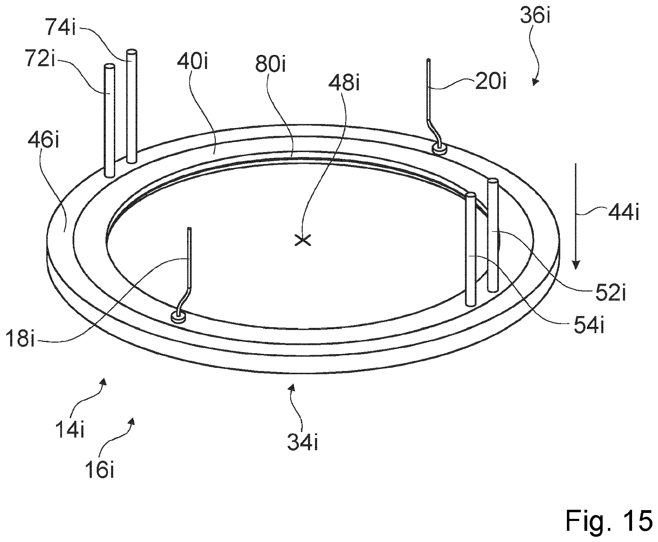

Figur 15 zeigt eine keramische Heizeinheit 36i für eine Siegelungsvorrichtung, wie sie in den vorhergehenden Abschnitten beschrieben ist. Die keramische Heizeinheit 36i umfasst einen Heizleiter (hier nicht näher dargestellt), der in einem Heizbereich der keramischen Heizeinheit 36i zumindest im Wesentlichen vollständig von einem wärmeleitenden keramischen Grundkörper 40i der keramischen Heizeinheit 36i umgeben ist. Die keramische Heizeinheit 36i umfasst zumindest einen zusätzlichen keramischen Grundkörper 46i. Der zusätzliche keramische Grundkörper 46i ist von dem keramischen Grundkörper 40i separat ausgebildet. Der keramische Grundkörper 40i und der zusätzliche keramische Grundkörper 46i sind auf unterschiedlichen, geschlossenen Bahnen um einen geometrischen Mittelpunkt 48i der keramischen Heizeinheit 36i, insbesondere einer ringförmigen Siegelzone der Siegelungsvorrichtung, angeordnet. Der keramischen Grundkörper 40i und der zusätzliche keramische Grundkörper 46i sind insbesondere als bezüglich des geometrischen Mittelpunkts 48i konzentrisch angeordnete Ringe oder Ringsegmente ausgebildet. Bezüglich weiterer Merkmale der keramischen Heizeinheit 36i und deren Anordnung in einer Siegelungsvorrichtung sei auf die Figuren 1 bis 14 und deren Beschreibung hingewiesen.

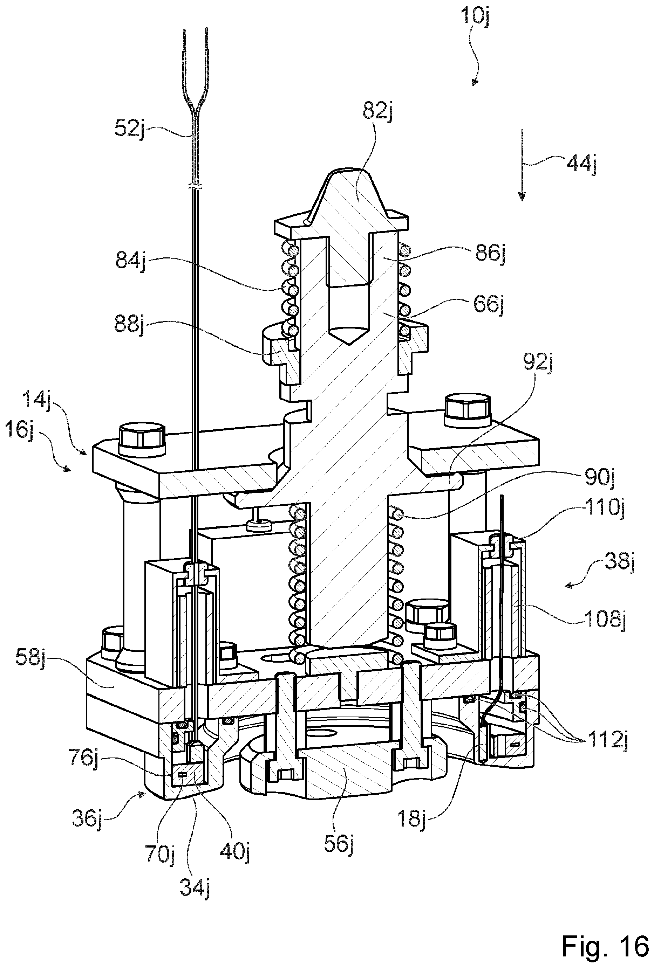

Figur 16 zeigt eine Schnittdarstellung einer, insbesondere alternativ ausgestalteten, Siegelungsvorrichtung 10j. Die Siegelungsvorrichtung 10j ist zu einem Versiegeln eines Behälters (hier nicht näher dargestellt) vorgesehen. Die Siegelungsvorrichtung 10j umfasst zumindest eine Siegeleinheit 14j zu einer eine Siegelung erzeugenden Kraft- und/oder Energieübertragung auf den Behälter. Die Siegelungsvorrichtung 10j, insbesondere die Siegeleinheit 14j, umfasst zumindest ein Siegelwerkzeug 34j, das eine, insbesondere ringförmige, Siegelzone zu einem physischen Kontakt mit dem Behälter ausbildet. Die Siegelungsvorrichtung 10j, insbesondere die Siegeleinheit 14j, umfasst zumindest eine keramische Heizeinheit 36j zu einer eine Siegelung erzeugenden Erhitzung der Siegelzone. Die keramische Heizeinheit 36j umfasst einen Heizleiter 70j, der in einem Heizbereich der keramischen Heizeinheit 36j zumindest im Wesentlichen vollständig von einem wärmeleitenden keramischen Grundkörper 40j der keramischen Heizeinheit 36j umgeben ist.

Die Siegelungsvorrichtung 10j weist zumindest eine zumindest teilweise in die Siegeleinheit 14j integrierte Prüfeinheit 16j zu einer Überwachung einer Versiegelungsgüte des von der Siegeleinheit 14j versiegelten Behälters auf. Die Prüfeinheit 16j umfasst zumindest einen Temperatursensor 18j, insbesondere eine Vielzahl an Temperatursensoren 18j, zu einer Erfassung einer Versiegelungstemperatur. Der Temperatursensor 18j ist in einer Sensormaterialaussparung des Siegelwerkzeugs 34j der Siegeleinheit 14j angeordnet, wobei die Sensormaterialaussparung des Siegelwerkzeugs 34j in einem Nahbereich der keramischen Heizeinheit 36j angeordnet ist. Vorzugsweise ist die Sensormaterialaussparung außerhalb des keramischen Grundkörpers 40j der keramischen Heizeinheit 36j angeordnet. Die Sensormaterialaussparung ist vorzugsweise direkt im Siegelwerkzeug 34j angeordnet. Bevorzugt ist die Sensormaterialaussparung seitlich versetzt zur keramischen Heizeinheit 36j, vorzugsweise seitlich versetzt zum keramischen Grundkörper 40j angeordnet. Bevorzugt ist die Sensormaterialaussparung, betrachtet entlang einer zumindest im Wesentlichen senkrecht zu einer Versiegelungsrichtung 44j der Siegelungsvorrichtung 10j verlaufenden Richtung, innerhalb einer durch den keramischen Grundkörper 40j begrenzten Bereich angeordnet. Bevorzugt weist die Sensormaterialaussparung, betrachtet entlang einer zumindest im Wesentlichen senkrecht zu einer Versiegelungsrichtung 44j der Siegelungsvorrichtung 10j verlaufenden Richtung, relativ zu einer der Sensormaterialaussparung, insbesondere dem darin angeordneten Temperatursensor 18j, zugewandten Außenfläche des keramischen Grundkörpers 40j einen maximalen Abstand insbesondere von weniger als 25 mm, bevorzugt von weniger als 10 mm und besonders bevorzugt von weniger als 8 mm auf.

Der Temperatursensor 18j ist in einem in der Sensormaterialaussparung angeordneten Zustand, betrachtet entlang der zumindest im Wesentlichen senkrecht zu einer Versiegelungsrichtung 44j der Siegelungsvorrichtung 10j verlaufenden Richtung, innerhalb des durch den keramischen Grundkörper 40j begrenzten Bereichs angeordnet. Bevorzugt ist der Temperatursensor 18j derart in der Sensormaterialaussparung des Siegelwerkzeugs 34j angeordnet, dass der Temperatursensor 18j, insbesondere ein Temperaturerfassungsbereich des Temperatursensors 18j, wie beispielsweise eine Temperatursensorspitze o. dgl., mit einem, insbesondere maximalen, Abstand von insbesondere weniger als 10 mm, bevorzugt von weniger als 5 mm und besonders bevorzugt von weniger als 2 mm zu einer Siegelfläche, insbesondere einer Siegelaußenfläche, des Siegelwerkzeugs oder einer Kontaktebene der Siegeleinheit 14j, beabstandet angeordnet ist.

Die Prüfeinheit 16j weist vorzugsweise zumindest eine Dichtungseinheit 38j zumindest zu einer Abdichtung eines Aufnahmeraums der Siegeleinheit 14j, in dem zumindest der Temperatursensor 18j angeordnet ist, auf. Der Aufnahmeraum der Siegeleinheit 14j ist bevorzugt durch einen Siegelhalter 58j der Siegeleinheit 14j und das Siegelwerkzeug 34j begrenzt. In dem Aufnahmeraum sind bevorzugt zumindest der keramische Grundkörper 40j und der Temperatursensor 18j angeordnet. Vorzugsweise umfasst die Dichtungseinheit 38j zumindest ein, insbesondere keramisches, Durchführelement 108j zu einer Durchführung von elektrischen Leitungen, insbesondere der Heizeinheit 36j oder des Temperatursensors 18j. Die Dichtungseinheit 38j umfasst zumindest ein, insbesondere am Durchführelement 108j angeordnetes, Kabelführungselement 110j, wie beispielsweise eine Kabeltülle o. dgl., zu einer Führung einer in dem Durchführelement 108j angeordneten Leitung der Heizeinheit 36j und/oder des Temperatursensors 18j aus dem Durchführelement 108j heraus, wobei das Kabelführungselement 110j bevorzugt eine Dicht- oder Zugentlastungsfunktion aufweist. Die Dichtungseinheit umfasst bevorzugt zumindest ein Dichtelement 112j, das an einer Schnittstelle zwischen dem Siegelhalter 58j und dem Siegelwerkzeug 34j angeordnet ist, insbesondere zu einer Abdichtung des durch den Siegelhalter 58j und das Siegelwerkzeug 34j begrenzten Aufnahmeraums. Bevorzugt umfasst die Dichtungseinheit 38j eine Vielzahl an Dichtelementen 112j, die an der Schnittstelle zwischen dem Siegelhalter 58j und dem Siegelwerkzeug 34j angeordnet ist. Bezüglich weiterer Merkmale der Siegelungsvorrichtung 10j sei auf die Figuren 1 bis 15 und deren Beschreibung hingewiesen.

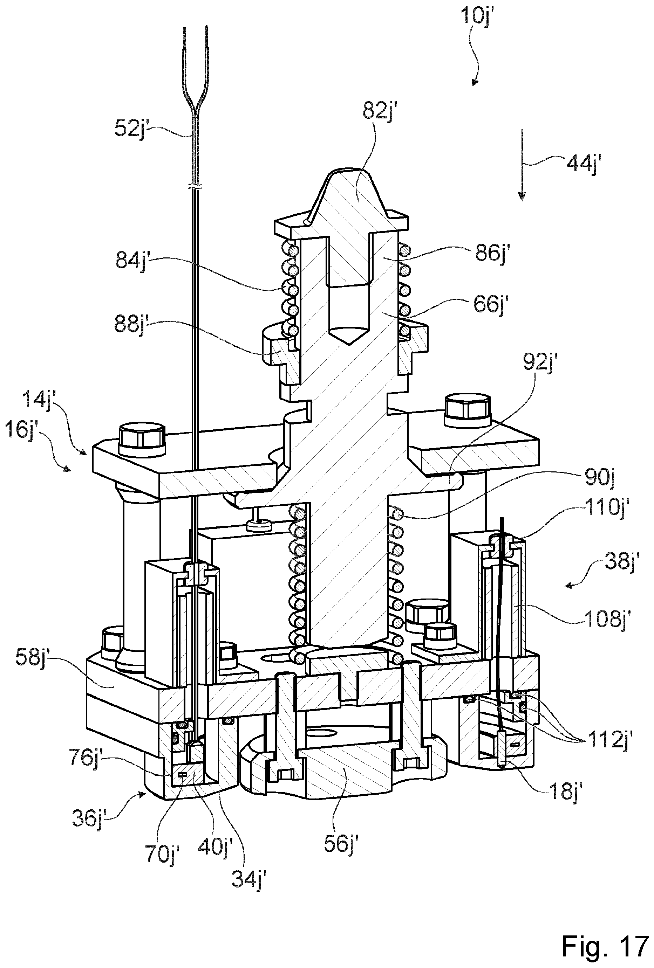

Figur 17 zeigt eine alternative Anordnung der Sensormaterialaussparung der Siegelungsvorrichtung 10j aus Figur 16, weshalb die Bezugszeichen in Figur 17 mit einem Apostroph versehen sind. Grundsätzlich weist die Siegelungsvorrichtung 10j' eine zur Siegelungsvorrichtung 10j aus Figur 16 analoge Ausgestaltung auf, wobei ein Unterscheid insbesondere in der Anordnung der Sensormaterialaussparung des Siegelwerkzeugs 34j' besteht. Die Sensormaterialaussparung des Siegelwerkzeugs 34j' ist, betrachtet entlang der Versiegelungsrichtung 44j' unterhalb des keramischen Grundkörpers 40j' angeordnet. Bevorzugt umfasst der keramische Grundkörper 40j' eine Sensormaterialaussparung, in der der Temperatursensor 18j' angeordnet ist. Die Sensormaterialaussparung des keramischen Grundkörpers 40j' ist bevorzugt fluchtend zur Sensormaterialaussparung des Siegelwerkzeugs 34j' angeordnet, insbesondere entlang der Versiegelungsrichtung 44j'. Vorzugsweise ist der Temperatursensor 18j' in der Sensormaterialaussparung des Siegelwerkzeugs 34j' und in der Sensormaterialaussparung des keramischen Grundkörpers 40j' angeordnet ist. Der Temperatursensor 18j' ist teilweise im keramischen Grundkörper 40j' und teilweise im Siegelwerkzeug 34j' angeordnet. Der Temperatursensor 18j'erstreckt sich bevorzugt vollständig durch den keramischen Grundkörper 40j' hindurch in das Siegelwerkzeug 34j' hinein. Bezüglich weiterer Merkmale der Siegelungsvorrichtung 10j' sei auf die Figuren 1 bis 16 und deren Beschreibung hingewiesen.

## Patentansprüche

1. Siegelungsvorrichtung, insbesondere Siegelkopf, zu einem Versiegeln eines Behälters (12a; 12e), mit zumindest einem Siegelwerkzeug (34a; 34b; 34c; 34d; 34e; 34f; 34g; 34h; 34i), das eine ringförmige Siegelzone zu einem physischen Kontakt mit dem Behälter (12a; 12e) ausbildet, und mit zumindest einer keramischen Heizeinheit (36a; 36b; 36c; 36d; 36e; 36f; 36g; 36h; 36i) zu einer eine Siegelung erzeugenden Erhitzung der Siegelzone **dadurch gekennzeichnet, dass** die keramische Heizeinheit (36a; 36b; 36c; 36d; 36e; 36f; 36g; 36h; 36i) einen Heizleiter umfasst, der in einem Heizbereich der keramischen Heizeinheit (36a; 36b; 36c; 36d; 36e; 36f; 36g; 36h; 36i) zumindest im Wesentlichen vollständig von einem wärmeleitenden keramischen Grundkörper (40a, 42a; 40b, 42b; 40c, 42c; 40d, 42d; 40e, 42e; 40f, 42f; 40g, 42g; 40h; 40i, 46i) der keramischen Heizeinheit (36a; 36b; 36c; 36d; 36e; 36f; 36g; 36h; 36i) umgeben ist.

2. Siegelungsvorrichtung nach Anspruch 1, **dadurch gekennzeichnet, dass** die keramische Heizeinheit (36a; 36b; 36c; 36d; 36e; 36f; 36g) zumindest einen weiteren keramischen Grundkörper (42a; 42b; 42c; 42d; 42e; 42f; 42g) umfasst, der von dem keramischen Grundkörper (40a; 40b; 40c; 40d; 40e; 40f; 40g) separat ausgebildet ist, wobei der keramische Grundkörper (40a; 40b; 40c; 40d; 40e; 40f; 40g) und der weitere keramische Grundkörper (42a; 42b; 42c; 42d; 42e; 42f; 42g) in einer zu einer Versiegelungsrichtung (44a; 44b; 44c; 44d; 44e; 44f; 44g) senkrechten Ebene zumindest im Wesentlichen gleich weit von einem geometrischen Mittelpunkt (48a; 48g) der keramischen Heizeinheit (36a; 36b; 36c; 36d; 36e; 36f; 36g), insbesondere der ringförmigen Siegelzone, entfernt angeordnet sind.

3. Siegelungsvorrichtung nach Anspruch 1 oder 2, **dadurch gekennzeichnet, dass** die keramische Heizeinheit (36i) zumindest einen zusätzlichen keramischen Grundkörper (46i), der von dem keramischen Grundkörper (40i) separat ausgebildet ist, umfasst, wobei der keramische Grundkörper (40i) und der zusätzliche keramische Grundkörper (46i) auf unterschiedlichen, geschlossenen Bahnen um einen geometrischen Mittelpunkt (48i) der keramischen Heizeinheit (36i), insbesondere der ringförmigen Siegelzone, angeordnet sind.

4. Siegelungsvorrichtung nach einem der Ansprüche 2 oder 3, **gekennzeichnet durch** eine Steuer- oder Regeleinheit (50a; 50e) zu einer separaten Steuerung oder Regelung einer Temperatur der unterschiedlichen keramischen Grundkörper (40a, 42a; 40b, 42b; 40c, 42c; 40d, 42d; 40e, 42e; 40f, 42f; 40g, 42g; 40h; 40i, 46i).

5. Siegelungsvorrichtung nach einem der vorhergehenden Ansprüche,
**dadurch gekennzeichnet, dass** zumindest ein elektrischer Anschluss (52g, 54g) der keramischen Heizeinheit (36g) für den Heizleiter quer, insbesondere senkrecht, zu einer Versiegelungsrichtung (44g) verläuft.

6. Siegelungsvorrichtung nach einem der vorhergehenden Ansprüche,
**dadurch gekennzeichnet, dass** der zumindest eine keramische Grundkörper (40a, 42a; 40b, 42b; 40c, 42c; 40d, 42d) das Siegelwerkzeug (34a; 34b; 34c; 34d) mit der Siegelzone zu einem direkten Kontakt mit dem Behälter (12a) zumindest teilweise ausbildet.

7. Siegelungsvorrichtung nach einem der Ansprüche 1 bis 5, **dadurch gekennzeichnet, dass** das Siegelwerkzeug (34e) als ein Aufsatz ausgebildet ist, der an dem keramischen Grundkörper (40e, 42e), insbesondere reversibel, angeordnet ist.

8. Siegelungsvorrichtung nach einem der vorhergehenden Ansprüche, **gekennzeichnet durch** eine Zentriereinheit (56d) zu einer Sicherung des Behälters während eines Versiegelungsvorgangs und einen Siegelhalter (58d) zu einer Aufnahme der keramischen Heizeinheit (36d), wobei die keramische Heizeinheit (36d) formschlüssig zwischen der Zentriereinheit (56d) und dem Siegelhalter (58d) angeordnet ist.

9. Siegelungsvorrichtung nach einem der Ansprüche 1 bis 5, **gekennzeichnet durch** einen Siegelhalter (58f) zu einer Aufnahme der keramischen Heizeinheit (36f), wobei der Siegelhalter (58f) das Siegelwerkzeug (34f) mit der Siegelzone ausbildet.

10. Siegelungsvorrichtung nach einem der vorhergehenden Ansprüche,
**dadurch gekennzeichnet, dass** der zumindest eine keramische Grundkörper (40a, 42a; 40b, 42b; 40c, 42c; 40d, 42d; 40e, 42e; 40f, 42f; 40g, 42g; 40h; 40i, 46i) aus Siliziumnitrid oder Aluminiumnitrid gefertigt ist.

11. Siegelungsstation, insbesondere für eine Abfüll- und/oder Produktionsanlage, mit zumindest einem Siegelungsträger (28a) zu einem Lagern zumindest einer Siegelungsvorrichtung, insbesondere mehrerer Siegelungsvorrichtungen, mit zumindest einer Siegelungsvorrichtung nach einem der vorhergehenden Ansprüche und mit zumindest einer Siegelunterstützung (30a) zu einem Stützen des Behälters (12a), insbesondere mehrerer Behälter, während des Versiegelns.

12. Verfahren zur Herstellung einer Siegelungsvorrichtung nach einem der Ansprüche 1 bis 10.

13. Verfahren nach Anspruch 12, **dadurch gekennzeichnet, dass** in zumindest einem Verfahrensschritt der zumindest eine keramische Grundkörper (40a, 42a; 40b, 42b; 40c, 42c; 40d, 42d; 40e, 42e; 40f, 42f; 40g, 42g; 40h; 40i, 46i) in einem ausgehärteten Zustand des keramischen Grundkörpers (40a, 42a; 40b, 42b; 40c, 42c; 40d, 42d; 40e, 42e; 40f, 42f; 40g, 42g; 40h; 40i, 46i) durch Materialabtrag an eine vorgesehene Behältergeometrie angepasst wird.

14. Verfahren nach Anspruch 12 oder 13, **dadurch gekennzeichnet, dass** in zumindest einem Verfahrensschritt, in welchem der zumindest eine keramische Grundkörper (40a, 42a; 40b, 42b; 40c, 42c; 40d, 42d; 40e, 42e; 40f, 42f; 40g, 42g; 40h; 40i, 46i) in einem ausgehärteten Zustand des keramischen Grundkörpers (40a, 42a; 40b, 42b; 40c, 42c; 40d, 42d; 40e, 42e; 40f, 42f; 40g, 42g; 40h; 40i, 46i) vorliegt, ein Temperatursensor (18a, 20a; 18b, 20b; 18c, 20c; 18d, 20d; 18e, 20e; 18f, 20f; 18g, 20g; 18h; 18i, 20i) in eine Sensormaterialaussparung, insbesondere eine Bohrung, des zumindest einen ausgehärteten keramischen Grundkörpers (40a, 42a; 40b, 42b; 40c, 42c; 40d, 42d; 40e, 42e; 40f, 42f; 40g, 42g; 40h; 40i, 46i) eingebracht wird.

## Claims

1. A sealing device, in paticular a sealing head, for sealing a container (12a; 12e), comprising at least one sealing tool (34a; 34b; 34c; 34d; 34e; 34f; 34g; 34h; 34i), which forms a ring-shaped sealing zone for a physical contact with the container (12a; 12e), and at least one ceramic heating unit (36a; 36b; 36c; 36d; 36e; 36f; 36g; 36h; 36i) for heating the sealing zone which generates a sealing, **characterized in that** the ceramic heating unit (36a; 36b; 36c; 36d; 36e; 36f; 36g; 36h; 36i) comprises a heating conductor, which is in a heating region of the ceramic heating unit (36a; 36b; 36c; 36d; 36e; 36f; 36g; 36h; 36i) surrounded at least substantially completely by a thermally conductive ceramic base body (40a, 42a; 40b, 42b; 40c, 42c; 40d, 42d; 40e, 42e; 40f, 42f; 40g, 42g; 40h; 40i, 46i) of the ceramic heating unit (36a; 36b; 36c; 36d; 36e; 36f; 36g; 36h; 36i).

2. The sealing device according to claim 1, **characterized in that** the ceramic heating unit (36a; 36b; 36c; 36d; 36e; 36f; 36g) comprises at least one further ceramic base body (42a; 42b; 42c; 42d; 42e; 42f; 42g) which is realized separately from the ceramic base body (40a; 40b; 40c; 40d; 40e; 40f; 40g), wherein, in a plane that is perpendicular to a sealing direction (44a; 44b; 44c; 44d; 44e; 44f; 44g), the ceramic base body (40a; 40b; 40c; 40d; 40e; 40f; 40g) and the further ceramic base body (42a; 42b; 42c; 42d; 42e; 42f; 42g) are arranged at least substantially at equal distances from a geometric center (48a; 48g) of the ceramic heating unit (36a; 36b; 36c; 36d; 36e; 36f; 36g), in particular of the ring-shaped sealing zone.

3. The sealing device according to claim 1 or 2, **characterized in that** the ceramic heating unit (36i) comprises at least one additional ceramic base body (46i), which is realized separately from the ceramic base body (40i), wherein the ceramic base body (40i) and the additional ceramic base body (46i) are arranged on different closed paths around a geometric center (48i) of the ceramic heating unit (36i), in particular of the ring-shaped sealing zone.

4. The sealing device according to claim 2 or 3, **characterized by** a control or regulation unit (50a; 50e) for a separate controlling or regulation of a temperature of the different ceramic base bodies (40a, 42a; 40b, 42b; 40c, 42c; 40d, 42d; 40e, 42e; 40f, 42f; 40g, 42g; 40h; 40i, 46i).

5. The sealing device according to any one of the preceding claims, **characterized in that** at least one electrical connection (52g, 54g) of the ceramic heating unit (36g) for the heating conductor extends transversely, in particular perpendicularly, to a sealing direction (44g).

6. The sealing device according to any one of the preceding claims, **characterized in that** the at least one ceramic base body (40a, 42a; 40b, 42b; 40c, 42c; 40d, 42d) at least partially forms the sealing tool (34a; 34b; 34c; 34d) with the sealing zone for a direct contact with the container (12a).

7. The sealing device according to any one of claims 1 to 5, **characterized in that** the sealing tool (34e) is configured as an attachment, which is, in particular reversibly, arranged at the ceramic base body (40e, 42e).

8. The sealing device according to any one of the preceding claims, **characterized by** a centering unit (56d) for securing the container during a sealing process and a sealing holder (58d) for an accommodation of the ceramic heating unit (36d), the ceramic heating unit (36d) being arranged in a form-fitting manner between the centering unit (56d) and the sealing holder (58d).

9. The sealing device according to any one of claims 1 to 5, **characterized by** a sealing holder (58f) for accommodating the ceramic heating unit (36f), wherein the sealing holder (58f) forms the sealing tool (34f) with the sealing zone.

10. The sealing device according to any one of the preceding claims, **characterized in that** the at least one ceramic base body (40a, 42a; 40b, 42b; 40c, 42c; 40d, 42d; 40e, 42e; 40f, 42f; 40g, 42g; 40h; 40i, 46i) is made of silicon nitride or aluminium nitride.

11. A sealing station, in particular for a filling and/or production installation, with at least one sealing carrier (28a) for supporting at least one sealing device, in particular a plurality of sealing devices, with at least one sealing device according to any one of the preceding claims and with at least one sealing support (30a) for supporting the container (12a), in particular a plurality of containers, during the sealing.

12. A method for producing a sealing device according to any one of claims 1 to 10.

13. The method according to claim 12, **characterized in that** in at least one method step, in a hardened state of the ceramic base body (40a, 42a; 40b, 42b; 40c, 42c; 40d, 42d; 40e, 42e; 40f, 42f; 40g, 42g; 40h; 40i, 46i), the at least one ceramic base body (40a, 42a; 40b, 42b; 40c, 42c; 40d, 42d; 40e, 42e; 40f, 42f; 40g, 42g; 40h; 40i, 46i) is adapted to a designated container geometry by material removal.

14. The method according to claim 12 or 13, **characterized in that** in at least one method step, in which the at least one ceramic base body (40a, 42a; 40b, 42b; 40c, 42c; 40d, 42d; 40e, 42e; 40f, 42f; 40g, 42g; 40h; 40i, 46i) is present in a hardened state of the ceramic base body (40a, 42a; 40b, 42b; 40c, 42c; 40d, 42d; 40e, 42e; 40f, 42f; 40g, 42g; 40h; 40i, 46i), a temperature sensor (18a, 20a; 18b, 20b; 18c, 20c; 18d, 20d; 18e, 20e; 18f, 20f; 18g, 20g; 18h; 18i, 20i) is inserted into a sensor material recess, in particular a bore, of the at least one hardened ceramic base body (40a, 42a; 40b, 42b; 40c, 42c; 40d, 42d; 40e, 42e; 40f, 42f; 40g, 42g; 40h; 40i, 46i).

## Revendications

1. Dispositif de scellement, en particulier tête de scellement, pour un scellement d'un récipient (12a; 12e), comprenant au moins un outil de scellement (34a; 34b; 34c; 34d; 34e; 34f; 34g; 34h; 34i) qui forme une zone de scellement annulaire pour un contact physique avec le récipient (12a; 12e), et comprenant au moins une unité de chauffage en céramique (36a; 36b; 36c; 36d 36e; 36f; 36g; 36h; 36i) pour un chauffage de la zone de scellement produisant un scellement, **caractérisé en ce que** l'unité de chauffage en céramique (36a; 36b; 36c; 36d; 36e; 36f; 36g; 36h; 36i) comprend un conducteur chauffant qui est entouré dans une zone de chauffage de l'unité de chauffage en céramique (36a; 36b; 36c; 36d; 36e; 36f; 36g; 36h; 36i) au moins sensiblement complètement par un corps de base en céramique thermoconducteur (40a, 42a; 40b, 42b; 40c, 42c; 40d, 42d; 40e, 42e; 40f, 42f; 40g, 42g; 40h; 40i, 46i) de l'unité de chauffage en céramique (36a; 36b; 36c; 36d; 36e; 36f; 36g; 36h; 36i).

2. Dispositif de scellement selon la revendication 1, **caractérisé en ce que** l'unité de chauffage en céramique (36a; 36b; 36c; 36d; 36e; 36f; 36g) comprend au moins un autre corps de base en céramique (42a; 42b; 42c; 42d; 42e; 42f; 42g) qui est réalisé séparément du corps de base en céramique (40a; 40b; 40c; 40d; 40e; 40f; 40g), le corps de base en céramique (40a; 40b; 40c; 40d; 40e; 40f; 40g) et l'autre corps de base en céramique (42a; 42b; 42c; 42d; 42e; 42f; 42g) étant disposés dans un plan perpendiculaire à une direction de scellement (44a; 44b; 44c; 44d; 44e; 44f; 44g) à une distance au moins sensiblement égale d'un centre géométrique (48a; 48g) de l'unité de chauffage en céramique (36a; 36b; 36c; 36d; 36e; 36f; 36g), en particulier de la zone de scellement annulaire.

3. Dispositif de scellement selon la revendication 1 ou 2, **caractérisé en ce que** l'unité de chauffage en céramique (36i) comprend au moins un corps de base en céramique supplémentaire (46i) qui est réalisé séparément du corps de base en céramique (40i), le corps de base en céramique (40i) et le corps de base en céramique supplémentaire (46i) étant disposés sur différentes trajectoires fermées autour d'un centre géométrique (48i) de l'unité de chauffage en céramique (36i), en particulier de la zone de scellement annulaire.

4. Dispositif de scellement selon l'une quelconque des revendications 2 ou 3,
**caractérisé par** une unité de commande ou de régulation (50a; 50e) pour une commande ou une régulation séparée d'une température des différents corps de base en céramique (40a, 42a; 40b, 42b; 40c, 42c; 40d, 42d; 40e, 42e; 40f, 42f; 40g, 42g; 40h; 40i, 46i).

5. Dispositif de scellement selon l'une quelconque des revendications précédentes, **caractérisé en ce qu'**au moins une borne électrique (52g, 54g) de l'unité de chauffage en céramique (36g) pour le conducteur chauffant s'étend transversalement, en particulier perpendiculairement, à une direction de scellement (44g).

6. Dispositif de scellement selon l'une quelconque des revendications précédentes, **caractérisé en ce que** l'au moins un corps de base en céramique (40a, 42a; 40b, 42b; 40c, 42c; 40d, 42d) réalise au moins en partie l'outil de scellement (34a; 34b; 34c; 34d) avec la zone de scellement pour un contact direct avec le récipient (12a).

7. Dispositif de scellement selon l'une quelconque des revendications 1 à 5,
**caractérisé en ce que** l'outil de scellement (34e) est réalisé sous forme de pièce rapportée qui est disposée sur le corps de base en céramique (40e, 42e), en particulier de manière réversible.

8. Dispositif de scellement selon l'une quelconque des revendications précédentes, **caractérisé par** une unité de centrage (56d) pour une fixation du récipient pendant une opération de scellement et un support de scellement (58d) pour un logement de l'unité de chauffage en céramique (36d), l'unité de chauffage en céramique (36d) étant disposée par engagement par correspondance de forme entre l'unité de centrage (56d) et le support de scellement (58d).

9. Dispositif de scellement selon l'une quelconque des revendications 1 à 5,
**caractérisé par** un support de scellement (58f) pour un logement de l'unité de chauffage en céramique (36f), le support de scellement (58f) réalisant l'outil de scellement (34f) avec la zone de scellement.

10. Dispositif de scellement selon l'une quelconque des revendications précédentes, **caractérisé en ce que** l'au moins un corps de base en céramique (40a, 42a; 40b, 42b; 40c, 42c; 40d, 42d; 40e, 42e; 40f, 42f; 40g, 42g; 40h; 40i, 46i) est fabriqué en nitrure de silicium ou en nitrure d'aluminium.

11. Station de scellement, en particulier pour une installation de remplissage et/ou de production, comprenant au moins un support de scellement (28a) pour un stockage d'au moins un dispositif de scellement, en particulier de plusieurs dispositifs de scellement, comprenant au moins un dispositif de scellement selon l'une quelconque des revendications précédentes et comprenant au moins un support de scellement (30a) pour un soutien du récipient (12a), en particulier de plusieurs récipients, pendant le scellement.

12. Procédé de fabrication d'un dispositif de scellement selon l'une quelconque des revendications 1 à 10.

13. Procédé selon la revendication 12, **caractérisé en ce que** dans au moins une étape de procédé, l'au moins un corps de base en céramique (40a, 42a; 40b, 42b; 40c, 42c; 40d, 42d ; 40e, 42e ; 40f, 42f ; 40g, 42g ; 40h ; 40i, 46i) est adapté dans un état durci du corps de base en céramique (40a, 42a ; 40b, 42b ; 40c, 42c ; 40d, 42d ; 40e, 42e ; 40f, 42f ; 40g, 42g ; 40h ; 40i, 46i) par enlèvement de matériau à une géométrie de récipient prévue.

14. Procédé selon la revendication 12 ou 13, **caractérisé en ce que** dans au moins une étape de procédé, dans laquelle l'au moins un corps de base en céramique (40a, 42a; 40b, 42b; 40c, 42c; 40d, 42d; 40e, 42e; 40f, 42f; 40g, 42g; 40h; 40i, 46i) est présent dans un état durci du corps de base en céramique (40a, 42a; 40b, 42b; 40c, 42c; 40d, 42d; 40e, 42e; 40f, 42f; 40g, 42g; 40h; 40i, 46i), un capteur de température (18a, 20a; 18b, 20b; 18c, 20c; 18d, 20d; 18e, 20e; 18f, 20f; 18g, 20g; 18h; 18i, 20i) est introduit dans un évidement de matériau de capteur, en particulier un alésage, de l'au moins un corps de base en céramique durci (40a, 42a; 40b, 42b; 40c, 42c; 40d, 42d; 40e, 42e; 40f, 42f; 40g, 42g; 40h; 40i, 46i).
